# EUROPEAN PATENT SPECIFICATION

(11) **EP 4 494 111 B1**
(45) Date of publication and mention of the grant of the patent: **20.05.2026**
(21) Application number: 23714367.2
(22) Date of filing: 20.03.2023
(51) Int. Cl.: G06V 20/52, G06V 20/40, G07C 1/24

(54) **SPORTS TIMING BASED ON A CAMERA SYSTEM**
SPORTZEITMESSUNG AUF DER GRUNDLAGE EINES KAMERASYSTEMS
CHRONOMÉTRAGE SPORTIF BASÉ SUR UN SYSTÈME DE CAMÉRAS

(30) Priority: 18.03.2022 NL 2031336
(43) Date of publication of application: 22.01.2025
(73) Proprietor: MyLaps B.V., 2012 PJ Haarlem (NL)
(72) Inventor: OCTAVIAN PENE, Cosmin, 2012 PJ Haarlem (NL); VERWOERD, Adriaan Klaas, 2012 PJ Haarlem (NL)
(74) Representative: Bird & Bird LLP - Hamburg
(86) International application number: PCT/NL2023/050145
(87) International publication number: WO 2023/177302

(56) References cited:
- EP-A1- 3 792 815
- DE-A1- 102006 006 667

## Description

### Technical field

The disclosure relates to sports timing based on a camera system and, in particular, though not exclusively, to methods and systems for sports timing based on a camera system, and a computer program product enabling a computer system to perform such methods.

### Background

Sports events such as car- or motor racing, cycling, athletics, drones matches and ice-skating, typically require accurate and fast time registration for tracking objects (persons or vehicles) during the event. Such timing system is usually based on an RFID system, wherein each participant in the event is provided with an RFID transponder, e.g. an UHF back scattering tag or an LF tag based on magnetic induction, which can be read out by RFID readers that are positioned along the track. Such readers may be implemented in the form of an antenna mat, side antenna's and/or antenna's mounted on a frame above a track. Each transponder is configured to transmit packets at a certain frequency and to insert a unique identifier into the packet such that a detector is able to associate a packet with a certain transmitter.

Drawbacks related to timing systems based on RFID technology include the necessity to provide every participant with an UHF tag, the sensitivity of UHF signals to environmental influences, e.g. moisture and rain, the detuning of UHF tags when it is positioned close to the human body, reflection of UHF signals by 'hard' objects, e.g. street surface, walls, etc. and collisions of UHF signals when a large number of participants simultaneously pass an RFID detector, e.g. an RFID antenna mat, that is provided across the track.

WO2021/048446 describes an example of a vision-based timing system for measuring a passing time for participants in a mass sports event, wherein many participants may simultaneously or almost simultaneously pass a virtual timing line. The system includes one or more cameras that capture images of participants passing the virtual timing line. The system may further include a processor that is configured to analyze the images, i.e. detect objects such as participants in a sports event, in the images, and to determine a passing time for detected objects that pass the virtual timing line. Further, based on the captured images, the processor is configured to detect identification information carrier, e.g. identification number and/or symbols (e.g. a QR code or the like) printed on a so-called BIB that is attached to the clothing of the participant, and to associate the detected identification information to the passing time of a participant. The advantage of such vision-based timing system is that it does not exhibit the drawbacks of RFID-based timing systems as mentioned above.

While the vision-based timing system allows accurate determination of passing times of participants passing the virtual timing line, some challenges still exist to accurately time and identify real time all participants that pass the virtual timing line. In particular, cameras positioned to capture the area around the timing line, such as the finish line, typically capture a scene that may substantially extend beyond the timing line, including the areas around, and in particular on both sides of the timing line which will including a large number of people, not only athletes but also other people, which do not participate in the sports event such spectators and officials.

This makes accurate, reliable and fast determination and identification of participants passing a timing line, e.g. a start line or a finish line, particular challenging, especially when dealing with mass sports events (e.g. a marathon or the like) wherein high detection accuracies are required for example detection accuracies of more than 99,9%. Additionally, different privacy regulations add further technical challenges in that data, especially biometric data, may only be used under stricture conditions.

Hence, from the above, it follows that there is a need in the art for improved vision-based timing of sports events, that allows highly accurate and reliable determination of passing times and identification of participants in a sports event, in particular mass sports events.

### Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non- exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including a functional or an object oriented programming language such as Java(TM), Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the embodiments are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the embodiments in this disclosure to reduce or eliminate at least one of the drawbacks known in the prior art. In an aspect, the embodiments may relate to a method as defined in claim 1, for determining a passing time of objects passing a virtual timing line.

In one embodiment, the method comprises inter alia receiving video frames captured by a calibrated camera system, each video frame representing a picture of scene including one or more objects moving on a track and objects moving outside of the track, each video frame being associated with a time instance, the calibrated camera system comprising calibration data defining a virtual timing zone in the video frames positioned at a predetermined distance from the calibrated camera system, the virtual timing zone extending across the track and extending along the sides of the track; detecting objects in the video frames using an object detection algorithm, the objects detected by the detection algorithm defining detected objects; determining depth information for at least part of the video frames, the depth information comprising information regarding the position of the detected objects relative to the calibrated camera system; determining whether detected objects are positioned inside the virtual timing zone or outside the virtual timing zone based on the calibration data and the depth information; applying a feature analysis algorithm to at least part of the detected objects in the video frames that are determined to be inside the virtual timing zone, the feature analysis algorithm determining identifying features for the one or more detected objects inside the virtual timing zone; and, determining a passing time for detected objects that determined to be positioned inside the virtual timing zone and pass a virtual timing line across the track based on the calibration data, the depth information and one or more time instances of one or more video frames of the detected objects that pass the virtual timing line.

Thus, the timing system detect objects in the images and use the depth information to determine whether the detected objects are inside or outside the virtual timing zone, i.e. zone that is positioned over the track, wherein the sides of the timing zone substantially coincide with the sides of the track. The computer may track detected objects inside the virtual timing zone and execute an identification algorithm to identify these objects (the athletes on the track) and/or to determine a passing time for these objects, while it will not process objects that are outside the virtual timing zone. This way, the computer is able to only process and identify athletes within the virtual timing zone that will pass the virtual timing line. Further, the computer is able to disregard objects, e.g. spectators and/or officials, outside the virtual timing zone. This way, the privacy of the spectators is respected, while athletes that participate in the sports event (which gave their consent for being timed by the vision-based timing system) are being timed and identified without wasting computer resources. The virtual timing zone effectively enables spatial filtering based on the depth information to filter out detected objects that are positioned outside the timing zone, before determining a passing time for detected objects and/or before executing an identification algorithm for identifying the timed objects.

The timing system is calibrated such that the camera system not only includes information, e.g. coordinates, of a virtual timing line across the track positioned at a predetermined distance from the camera system, but also the information, e.g. coordinates, of an zone, e.g. a 2D area or 3D volume, that is positioned over the track and having sides that extend along the track. Preferably, the sides of the timing and identification zone substantially coincide with the edges or borders of the track. The virtual timing line may be positioned within the virtual timing zone. In case the coordinates of the virtual timing zone define a 3D volume, the virtual timing and identification zone may define a volume of interest (VOI) positioned over the track, having sides extending along the track. Preferably, the sides of the timing and identification zone substantially coincide with the edges or borders of the track.

In an embodiment, the width of the virtual timing zone may be equal or larger than the width of the track and wherein the length of the virtual timing zone is equal or larger than the width of the track.

In an embodiment, the virtual timing zone may be substantially rectangularly shaped wherein long side of the rectangularly shaped virtual timing zone is aligned with the sides of the track.

The virtual timing zone thus defines part on the track where only athletes are allowed to come, so that the timing system can efficiently determine if an object is an athlete or not. Objects within the virtual timing zone extending are monitored, identified and timed when passing a virtual timing line (or plane). The virtual timing zone may have many different shapes depending on the situation as long as the virtual timing zone identifies an area in which (only) athletes move and which includes a virtual timing line.

In an embodiment, the method may further comprise: applying a feature analysis algorithm to detected objects in the video frames that are within the virtual timing zone, the feature analysis algorithm determining identifying features for the one or more detected objects in the video frames; and, determining the identity of the detected object for which the passing time is determined based on the identifying features of the detected object that has passed the timing line.

In an embodiment, the identifying features of a detected object may include one or more an optically readable identification markers such as a race bib or a printed mark; and/or, one or more characteristics about the shape and/or colour of the detected object; and/or, in case the detected object is an animal or a human, one or more biometric identifiers of the detected object.

In an embodiment, the object detection algorithm and the feature analysis algorithm may be part of a machine learning algorithm, for example a deep learning algorithm such as a convolutional deep neural network system, that is trained to detected one or more objects in a video frame and to determine identifying features associated with detected objects.

In an embodiment, objects may be detected in the images using an instance object segmentation algorithm based on deep neural network. In an embodiment, the instance object segmentation algorithm may be based on a R-CNN, fast R-CNN, faster R-CNN, mask R-CCN algorithm or related algorithms. Such algorithm is capable of detecting and classifying objects in an image in (almost) real-time.

In an embodiment, identification of an object may be based on an optical character recognition (OCR) algorithm, or an optical code recognition algorithm may be used to recognize (printed) identification markers in a ROI. In an embodiment, the identification markers may include printed characters. In an embodiment, the printed characters may be only visible using an infrared camera.

In a further embodiment, identification of an object may be based on an algorithm that is configured to identify an object based on biometric features, e.g. a face recognition algorithm that is configured to identify persons based on facial features.

In an embodiment, the calibration data may include coordinates defining the virtual timing zone, preferably the coordinates defining a 2D area over the track, wherein the sides of the 2D area are substantially parallel to the sides of the track; or, the coordinates defining a 3D area over the track, wherein the side surfaces of the 3D area are substantially parallel to the sides of the track.

In an embodiment, the determining detected objects that are positioned within the virtual timing zone includes: using the depth information to determine position of the objects; determining on the basis of the positions and the coordinates of the virtual timing zone if an object is positioned in or outside the virtual timing zone.

In an embodiment, the detecting one or more objects in the video frames may include: determining one or more regions of interest ROIs in a video frame, each ROI comprising pixels representing an object; determine identifying features in one of the one or more ROls; and, determine an object in the ROI based on the determined identifying features.

In an embodiment, the camera system may comprise a plurality of camera modules, preferably two camera modules forming a stereo camera, the stereo camera being configured to generate at each time instance at least a first video frame and a second video frame of the scene and wherein the depth map is determined based on a disparity mapping algorithm configured to determine a disparity between pixels of the first and second video frame.

In an embodiment, the passing time may be determined based on at least one video frame of the scene wherein a predetermined part of the detected object that has passed the virtual plane.

In a further aspect, the embodiments may relate to a method as defined in claim 11 for calibrating a timing system configured to determine a passing time of an object passing a timing line across a sports track, wherein the method comprises inter alia: receiving video frames, preferably a sequence of video frames, captured by a camera system, preferably a 3D camera system, of a timing system, each video frame representing a picture of scene including the track and one or more calibration markers, preferably at least two calibration markers defining positions at opposite sides of the track; determining depth information, e.g. one or more depth maps, based on the video frames, the depth information comprising information regarding the distance between one or more objects in the picture of a video frame; using the depth information to determine a relative position between of the one or more calibration markers and the camera system; determining calibration data, the calibration data including position information of a virtual timing line oriented across the track at a predetermined position relative to the position of the one or more calibration markers; and, position information associated with a virtual timing zone positioned over the track at a predetermined position relative to the position of the one or more calibration markers, the timing zone extending across the track and along the track; and, storing the coordinates of the virtual plane in a memory of the timing system.

In an embodiment, the calibration data includes coordinates defining the virtual timing zone, preferably the coordinates defining a 2D area, e.g. a rectangular shaped area, over the track, wherein the sides of the 2D area are substantially parallel to and/or substantially coincide with the sides of the track; or, the coordinates defining a 3D volume, e.g. a rectangular shaped volume, over the track, wherein the sides surfaces of the 3D volume are substantially parallel to and/or substantially coincide with the sides of the track. The sides of the virtual timing zone may extend over a substantial length along the sides of the track so the system is able to distinguish athletes from spectators.

In another aspect, the embodiments may relate to a system as defined in claim 12 for determining a passing time of an object passing a timing line across a sports track comprising: comprising inter alia:
at least one camera system connected to a computer; the computer comprising a computer readable storage medium having computer readable program code embodied therewith, and a processor, preferably a microprocessor, coupled to the computer readable storage medium, wherein responsive to executing the computer readable program code, the processor is configured to perform executable operations comprising: receiving video frames captured by a calibrated camera system, each video frame representing a picture of scene including one or more objects moving along a track, each video frame being associated with a time instance; determining or receiving calibration data, the calibration data defining a virtual timing zone positioned at a predetermined distance from the calibrated camera system, the virtual timing zone extending across the track and along the track and including a virtual timing line across the track; detecting objects in the video frames using an object detection algorithm, the objects detected by the detection algorithm defining detected objects; determining depth information for at least part of the video frames, the depth information comprising information regarding a distance between detected objects and the calibrated camera system; determining detected objects that are positioned within the virtual timing zone based on the calibration data and the depth information; and, determining a passing time for detected objects that pass the virtual timing zone within the virtual timing zone, based on the calibration data, the depth information and one or more time instances of one or more video frames of the detected objects.

In a further embodiment, the executable operations may further comprise any of the method steps as described above.

In yet a further aspect, the embodiments may relate to a calibration module as defined in claim 14 for a timing system configured to determine a passing time of an object passing a timing line across a sports track, wherein the module comprises inter alia: processing means for receiving video frames, preferably a sequence of video frames, captured by a camera system, preferably a 3D camera system, of a timing system, each video frame representing a picture of scene including the track and one or more calibration markers, preferably at least two calibration markers defining positions at opposite sides of the track; determining depth information, e.g. one or more depth maps, based on the video frames, the depth information comprising information regarding the distance between one or more objects in the picture of a video frame; using the depth information to determine a relative position between of the one or more calibration markers and the camera system; determining calibration data, the calibration data including position information of a virtual timing line oriented across the track at a predetermined position relative to the position of the one or more calibration markers; and, position information associated with a virtual timing zone over the track at a predetermined position relative to the position of the one or more calibration markers, the timing zone extending across the track and along the track; and, storing the coordinates of the virtual plane in a memory of the timing system.

The embodiments may also relate to a computer program or suite of computer programs comprising at least one software code portion or a computer program product storing at least one software code portion, the software code portion, when run on a computer of a system defined in claim 12, being configured for executing any of the method steps described above.

The embodiments may further relate to a non-transitory computer-readable storage medium storing at least one software code portion, the software code portion, when executed or processed by a computer of a system defined in claim 12, is configured to perform any of the method steps as described above.

The embodiments will be further illustrated with reference to the attached drawings, which schematically will show embodiments according to the invention. It will be understood that the invention is not in any way restricted to these specific embodiments.

### Brief description of the drawings

**Fig. 1** depicts a schematic of a vision-based sportstiming system;
**Fig. 2** depicts a 3D camera system configured to generate depth information;
**Fig. 3** depicts the principle of the disparity mapping technique for determining depth information;
**Fig. 4** depicts detection, classification and identification of athletes based on images captured by a camera;
**Fig. 5** depicts a vision-based timing system for determining passing times of athletes passing a virtual timing line;
**Fig. 6** depicts a vision-based timing system for determining passing times of athletes passing a virtual timing line according to an embodiment;
**Fig. 7A** and **7B** depict the calibration and use of a calibrated vision-based timing system according to an embodiment;
**Fig. 8** depicts a flow diagram of a method of calibrating a timing system according to an embodiment;
**Fig. 9A** and **9B** depict a method of determining a passing time according to an embodiment;
**Fig. 10** depicts a method of identification of an object passing a virtual timing line according to an embodiment;
**Fig. 11** depicts a flow diagram of a method of determining a passing time according to an embodiment;
**Fig. 12** depicts a system for determining a passing time according to an embodiment of the invention;
**Fig. 13** is a block diagram illustrating an exemplary data processing system that may be used for executing methods and software products described in this application.

### Detailed description

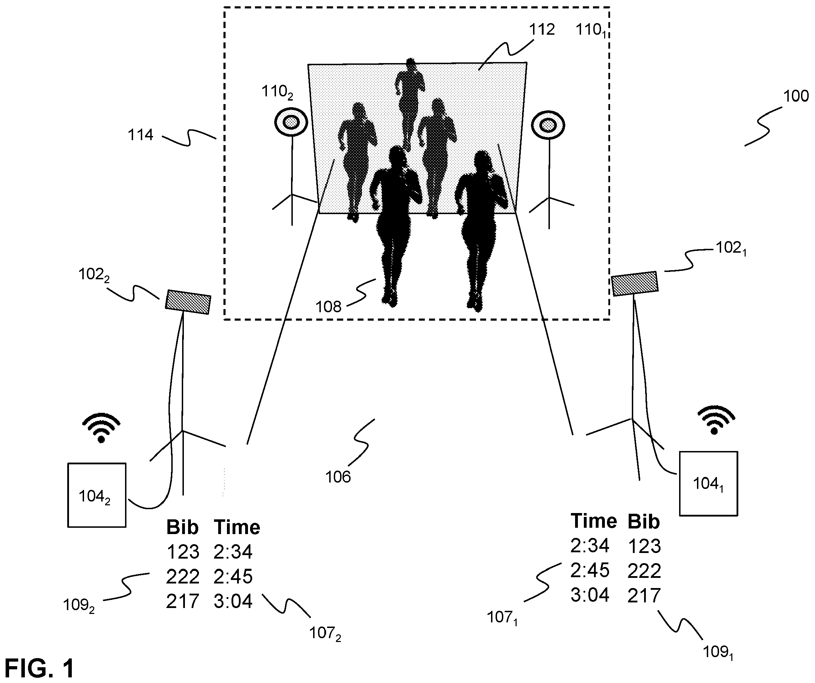

**Fig. 1** depicts a vision-based sports timing system **100** including one or more camera systems **102_{1,2}** controlled by a computer **104_{1,2}**. Each camera system may be configured to capture a scene of a sports track **106** and to determine depth information associated with the captured system. For example, in an embodiment, the depth information may include a so-called depth map for video frames generated by an image sensor of the camera system. The depth map of a video frame, e.g. an RGB video frame, may be represented as a pixelated image comprising pixel values representing a distance value for each pixel of a video frame. The distance value may define a distance between the camera (the imaging plane of the camera) and objects in the video frames.

For example, a group of pixels in a video frame may be part of an object in the scene that is imaged by the camera system. In that case, the depth map may indicate the relative distance between the camera (the viewpoint) and the surface of the object in the scene. Hence, during capturing of a sequence of time-stamped video frames of an object, e.g. an athlete or a vehicle that is moving along the sports track, the associated depth maps may provide information about the distance between the moving object in the video frames and the (static) camera system as a function of time.

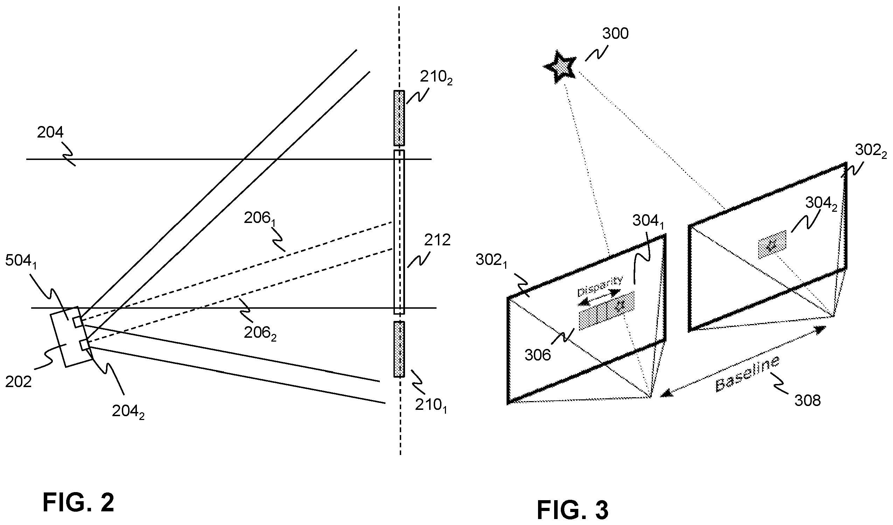

Camera systems that are capable of generating depth-maps are known. For example, in an embodiment, a camera may be implemented as a 3D camera system e.g. stereo camera comprising two or more camera modules, wherein each camera module has its own lens system. An example of a top-view of such 3D imaging system is depicted in **Fig. 2****.** As shown in this figure, a stereo camera **202** may be positioned along a side of the track **204.** The stereo camera has (at least) two camera modules **204_{1,2}** with a parallel optical axis **206_{1,2}** to observe a scene of the racetrack including objects, e.g. athletes (as depicted in **Fig. 1**). The scene may also include calibration markers **210_{1,2}**. This way, two images of the same scene from different points of view are acquired. Such stereo camera may be used to determine depth maps and/or 3D pictures. A 3D camera system may have more than two camera modules so that multiple images can be used to compute a depth map. This way the accuracy of the depth maps can be improved.

The 3D camera system (or the computer system controlling the camera system) may include a module for computing a depth map based on video frames captured by the two (or more) camera modules. In an embodiment, the module may use a disparity mapping technique compute a depth map-based images generated by the two image sensors. **Fig. 3** schematically shows the principle of disparity mapping. The 3D camera system comprises two camera modules separated by a distance which is referred to as the baseline **308.** The two camera modules may be synchronized so that each time instance the two video frames **302_{1,2}** of the same object from a different viewpoint are generated.

To compute a depth map based on the video frames, a matching algorithm may be executed to match corresponding pixels of the left and right video frame. Hence, an object **300** imaged by two synchronized camera modules is positioned in the same position **304_{1,2}** but separated by a baseline distance **308.** In that case, the object will appear on similar positions in both images. The distance between the objects in the left and right image is known as the disparity **306.** An algorithm for constructing the disparity map based on the two images is known as a stereo matching algorithm. Various stereo matching algorithm exist, which needs to be both accurate and fast for real-time applications.

The camera systems used in the embodiments of this application are not limited to stereo based-imaging techniques and other imaging techniques may be used as well. For example, a depth map may be generated based on an RGB / infrared (IR) technique (as used by the Kinect) or a 3D time-of-flight (TOF) technique, LIDAR or combinations thereof, wherein infrared radiation, e.g. an IR camera or IR laser, may be used to determine depth information of a scene that is captured by a camera. In some embodiments, the camera system may be a color-infrared camera configured to capture image of the visible spectrum (e.g. RGB) and the infrared (IR) spectrum to capture images of objects. For example, the use of an infrared images may be advantageous when light conditions are not optimal, e.g. due to weather conditions (e.g. fog, rain, etc.) or during twilight.

To increase the angel of view of the camera system, in some embodiments, one or more wide angle camera modules may be used, e.g. a 180-degree camera or a 360-degree camera. Also, for such type of video formats, such as 360-video or immersive video, which is generated using special 360 camera systems, wherein the video is projected onto a 2D video frame using e.g. an equirectangular projection, depth maps can be generated. To enable accurate image processing, the cameras used in the timing system may have a frame-rate of at least 30 frames per second or more. Depending on the application, the frame rate may be at least 60 frames per seconds or more. Additionally, the camera may be a high-resolution camera having an image resolution of 4K or more.

As shown in **Fig. 1****,** the camera system may include one or more (multiple) camera modules **102_{1,2}** positioned at the side(s) and/or above the sports track. The camera modules may be aligned and calibrated such each of the camera module captures the same scene **114** of the sports track, including objects moving along the track. To that end, one or more calibration markers **110_{1,2}** may be used. In an embodiment, such calibration markers may be positioned above the track and/or along one side or both sides of the track. The one or more calibration markers may be used by the timing system to determine coordinates of a virtual timing reference **112.** Calibration markers may be physical objects arranged along the track as shown in **Fig. 1****.** Alternatively, in an embodiment, calibration markers may be geo-coordinates defining coordinates of a virtual timing reference.

Based on the implementation, the virtual timing reference may define a virtual timing line or a virtual timing plane arranged at a distance z from the camera system. A virtual timing line may be used when determining a passing based on two coordinates, e.g. an object passing the time line at position x or based on three coordinates, e.g. part of an object passing the time line at position x and height y. A virtual timing plane may for example be used to determine a passage time when a specific part of an object has passed the virtual timing plane. For example, for certain use cases it is desired to determine a passing time when a specific part of an object, e.g. the chest of an athlete comprising a BIB, passes the virtual timing plane.

Below, whenever reference is made to virtual timing line, other types of virtual timing references such as a virtual timing plane should also be included. The timing line may be arranged across the track at the position of (or relative to) the one or more calibration markers. For example, when using two calibration markers, the virtual timing line may be positioned between the two calibration markers so that it is arranged across the track between (or relative to) the two calibration markers.

The calibration process requires a 3D camera system to accurately detect the position and orientation of the calibration markers under all outdoor circumstances. Therefore, the calibration markers may be designed to have predetermined distinct shape and/or color combination so that during calibration an object detection program may easily and accurately determine the position of the (edges of) markers in video frames so that the coordinates of the virtual plane can be accurately determined. When the (calibrated) timing system is in operation, the 3D camera system may capture video frames that include athletes passing the through the virtual plane. While the figure illustrates a camera system along the side of the racing track, in other embodiments, one or more of the camera systems may be mounted above the sports track using a suitable mounting structure and/or integrated in a mat that at is arranged across the sports track.

As will be described hereunder in more detail, the timing system depicted in **Fig. 1****,** is configured to determine the passing times of objects passing the virtual plane. Further, the timing system is configured to identify objects for which a passing time is determined. Identification may be based on identification markers associated with the objects. For example, in case of athletes, identification markers may include (but is not limited to) the race BIB, colors, biometric information, etc. In case of a vehicle identification markers may include characteristics of the vehicle, e.g. color, shape, branding marks, etc.

The computer for controlling the one or more 3D camera systems and executing the calibration and timing methods may be implemented as a stand-alone computer or a set of (wirelessly) connected computers. For example, the 3D camera systems that are used for determining the passing time based on virtual plane located across the track may be controlled by a computer that includes a wireless interface for wireless communication with the computers that control the other 3D camera systems.

A plurality of timing systems as depicted in **Fig. 1** may be positioned at different locations along the track. This way each timing system may determine passing times based on video frames of objects passing the virtual plane. The timing systems may support a wireless protocol that allows to setup a mesh-network of timing systems along the track. This way, information determined by one timing system may be used by one or more other timing systems that are part of the mesh network.

The data processing methods that are used by the timing system to calculate the depth maps and analyze the video frames may require real-time imaging processing so in some embodiments the computer system **104_{1,2}** may include one or more special purpose processors, such as a GPU, to execute the computation intensive parts of calibration and timing process. In other embodiments, the one or more 3D camera systems may be connected to cloud resources which may run the computation intensive parts of the processes. A CPU clock or a GPS clock may be used to link the video frames with time information. For example, in an embodiment, each or at least part of the video frames may be linked to a time instance by time stamping the video frames.

The timing system in **Fig. 1** may be operated based on a single 3D camera. Alternatively, two or more 3D camera systems at different viewing angles may be used for capturing video frames of the scene. In that case, the 3D camera systems may be time synchronized so that time-stamped video frames of the different 3D camera systems can be easily combined and analyzed. Multiple 3D camera systems may be used to cope with collisions, i.e. events wherein multiple objects pass the virtual plane.

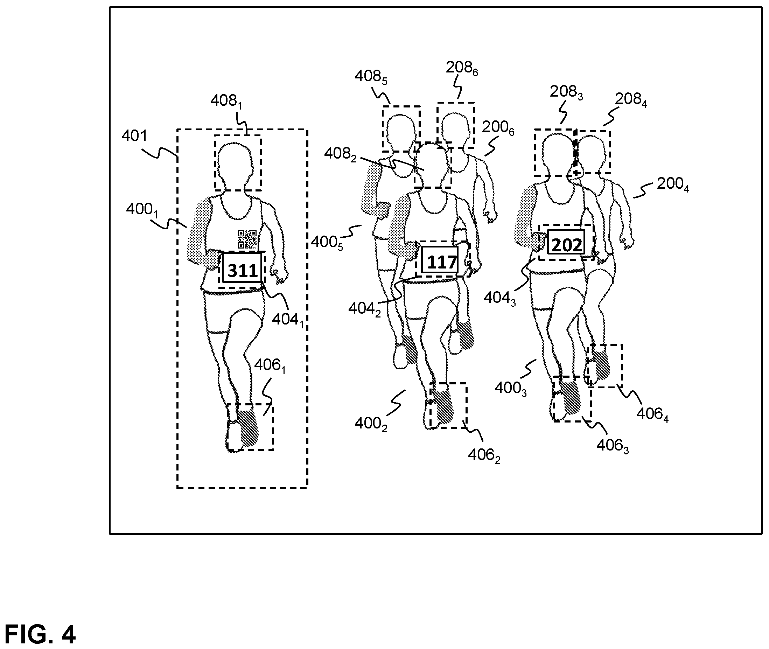

The computer system of the timing system may include one or more image processing units configured to execute various image processing algorithms. For example, in an embodiment, the computer system may be configured to execute an object detection algorithm for detecting objects in images captured by the camera system. In particular, an instance object segmentation algorithm may be used to detect and delimit an object in an image from other objects in the image. As shown in **Fig. 4****,** instance segmentation allows detection of multiple objects **400₁₋₆**, e.g. athletes or vehicles, of the same class wherein each detected object may be treated as an individual instance. The instance segmentation algorithm may determine a bounding box defining a region of interest ROI **401** (for clarity reasons only the ROI of the first object is depicted in the figure) in the image that includes the detected object. The ROI comprising the detected object may be labelled with an object identifier ID, e.g. a unique number assigned to an object by the algorithm that is used by the system to distinguish different detected objects of the same class in one image.

This way, objects in an image, such as athletes, cars, bikes, etc. may be accurately and efficiently detected and classified and represented as labelled ROIs in an image. In an embodiment, information about the ROIs and the IDs may be added or linked as metadata to an image. Efficient instance object segmentation algorithms based on deep learning may be used, including but not limited to algorithms such as R-CNN, fast R-CNN or faster R-CNN or related algorithms, which are capable of detecting and classifying objects in an image in (almost) real-time. An overview of state-of-the-art instance segmentation algorithms is provided in the article by A. Hafiz et al, A survey on Instance Segmentation: State of The Art, International Journal of Multimedia Information Retrieval volume 9, pages171-189 (2020), which hereby is incorporated by reference into this application. These algorithms provide very efficient run-time performance so that they can be executed locally, e.g. using the computer of the timing system.

To speed up the object detection and identification process, the CPU-based local computer of the timing system that runs the image processing algorithms may include one or more special purpose processors, e.g. one or more graphical processing units GPUs, tensor processing units TPUs or field programmable gate arrays FPGAs, which may be especially adapted to accelerate computations, in particular computations associated with neural networks, performed by the various image processing algorithms.

Further, in an embodiment, the computer system may be configured to execute an object identification algorithm. Here, object identification refers to the process of assigning an identity, typically personal data (e.g. name of a person, an animal, a vehicle or a team that is stored prior to the event in a database), to a detected object based on these object features. An example of an object feature may be (part of) a number or a code (e.g. a QR code) on the BIB of a participant. When a participant registers himself with a sports event, he will receive identification information, e.g. identification number such as a BIB number or a code, which may be used by the timing system to link data, e.g. information about passing times, to personal data, e.g. a name of a registered participant, that is stored in a central database. Different object features may be used to link an object to an identity. For example, in case the objects represent persons, object features may include (but is not limited to) (a part of) a race BIB, colors, biometric information of a person, visual identification codes, e.g. a QR code, object items, such as shoes, shirts, branding marks, etc. In case the objects represent vehicles, object features may include characteristics of the vehicle, e.g. number, color, shape, branding marks, license or registration plate, etc. The computer may include or be connected to a wireless radio module for wirelessly connecting the timing system to a further computer system (not shown), e.g. a remote computer system e.g. a server system, which is configured to centrally process determined passing times of detected and identified objects.

As shown **in** **Fig. 4****,** a detected object in an image may be identified, i.e. associated with an identity, based one or more object features such as identification markers **404₁₋₃** (e.g. BIBs, QR codes, printed text, symbols, etc.) that are specifically used for identifying the object, biometric information **408₁₋₆** (e.g. facial features, age, gender, length, hair color, etc.) or object items **406₁₋₆** that are specific for a particular object (e.g. color and/or design clothes and/or shoes or color and/or shape of a vehicle). These object features may define visual identification information that can be used by the timing system to identify an object that passes a virtual timing line.

The ROIs may be analyzed by one or more algorithms that are configured to detect object features in a ROI and extracting identification information from the ROI. For example, an optical character recognition (OCR) algorithm may be used to recognize (printed) identification markers in a ROI. Typically, an OCR algorithm may include a text detection algorithm and a text recognition algorithm. These printed identification markers may be based on characters and/or symbols, such as example numbers and/or characters on a BIB or a vehicle. Alternatively, and/or in addition, a code detection algorithm may be used to detect and encode a visual code, typically a standardized code, in a ROI. For example, BIB or clothes of an athlete may include a QR code or a variant thereof, in which identification information is encoded as (for example) a geometrical structure. Further, a face detection and recognition algorithm may be used for identifying a person in a ROI based on facial features.

In some embodiments, a pose estimation algorithm which is configured to identify a pose of an object. For example, in an embodiment, a pose estimation algorithm may determine key joints (shoulders/hips/knees/head) of an object, which may be used to identify possible locations in a ROI that may represent object identification features, i.e. features of an object that can be used for identification. For example, based on the location of the key joints, specific parts of a body, e.g. chest, arm, head, legs or feet, may be determined. Based on the locations of the key joints, locations within a ROI may be determined that have a high chance of comprising one or more object features, e.g. a face, a chest or feet.

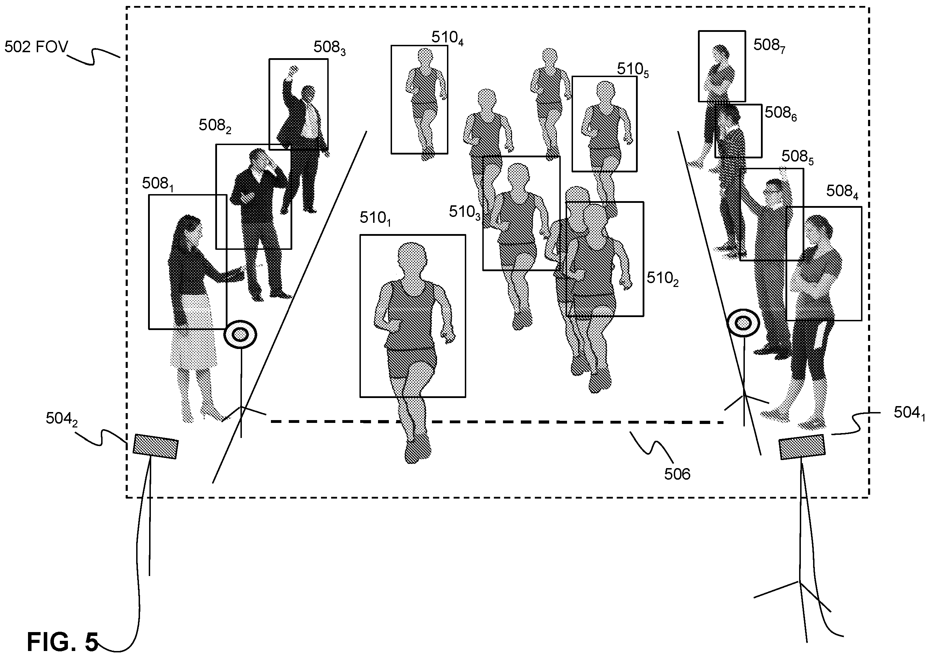

When using a vision-based timing system for timing a mass-event such as a marathon or the like, typically the timing area will be very crowded with both athletes and other persons e.g. spectators or officials, that do not participate to the sports event. **Fig. 5** schematically depicts a calibrated timing system comprising a computer-controlled camera system **504_{1,2}** capturing images of the area of the track that includes a virtual timing line **506.** Typically, the field of view (FOV) **502** of the camera system is selected such that the images include a substantial part of the track behind the virtual timing line so that the images include all athletes approaching the timing line. This way, an object detection algorithm can detect objects in the images and track the objects in time. Typically, the object detection algorithm is a fast object detection and classification algorithm which may detect and classify people in the images. In this case, the people will not only include the athletes **510₁₋₅** approaching the timing line but for example also spectators and officials **508₁₋₈**. In such situation, a substantial part of the computer resources is used to detect objects that do not take part in the timing process. Additionally, the image processing system will apply object detection and identification algorithms to people that did not gave their consent to be captured and to be processed by image processing algorithms. Depending on the country in which the timing system is used, this may give privacy problems.

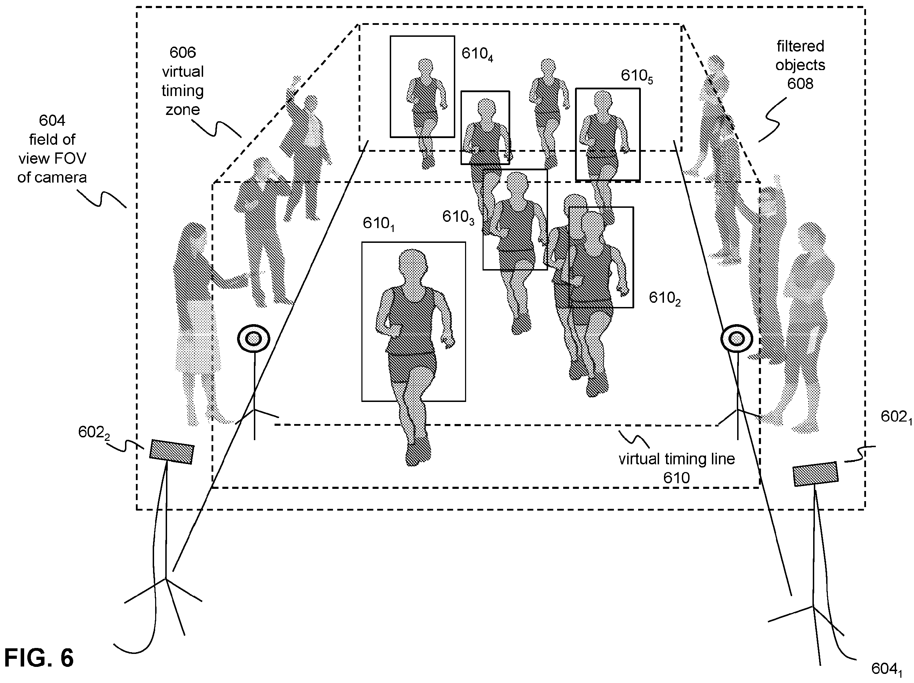

To address this problem, a spatial filtering technique based on depth information in the is used to filter out detected objects. This is schematically shown in **Fig. 6. Fig. 6** depicts a calibrated timing system comprising a computer-controlled camera systems **604_{1,2}** however in this case, the system is calibrated such that it not only includes the coordinates of a virtual timing line **610** across the track positioned at a predetermined distance from the camera system, but also the coordinates of an zone, e.g. a 2D area or 3D volume, that is positioned over the track and extending along the track. Typically, the virtual timing line may be positioned within this zone, which hereafter may be referred to as a virtual timing zone **606.** In case the coordinates of the virtual timing zone define a 3D volume, the virtual timing zone may define a volume of interest (VOI) positioned over the track. Thus, during calibration of the timing system, position information, e.g. coordinates or information to determine coordinates of a virtual timing zone may be determined, which extends across the track and along the track. The position information may be stored in the memory of the timing system so that it can use this information for determining passing times of objects (e.g. athletes) passing the virtual timing line. Preferably, the virtual timing zone defines a zone on the track where only the athletes **610₁₋₅** are allowed to come. Hence, when the timing system detects an object within the virtual timing zone, it is highly likely that the object is an athlete. Thus, using the virtual timing zone, the timing system can efficiently determine if detected objects in images are athletes or not.

As will be described below in more detail, the calibrated timing system is configured to capture images and depth information associated with the images. Further, it is configured to detect objects in the images and use the depth information to determine whether the detected objects are inside the virtual timing zone. If that is the case, the computer will track detected objects within the virtual timing zone and execute an identification algorithm to identify objects detected within the virtual timing zone (the athletes on the track), while it will not process detected objects that are located outside the virtual timing zone. This way, the computer will only process, e.g. time and identify, athletes within the virtual timing zone that will pass the virtual timing line. The computer will disregard objects, e.g. spectators and/or officials, outside the virtual timing zone. This way, the privacy of the spectators is respected while athletes that participate in the sports event (which gave their consent for being timed by the vision-based timing system) are being timed without wasting computer resources.

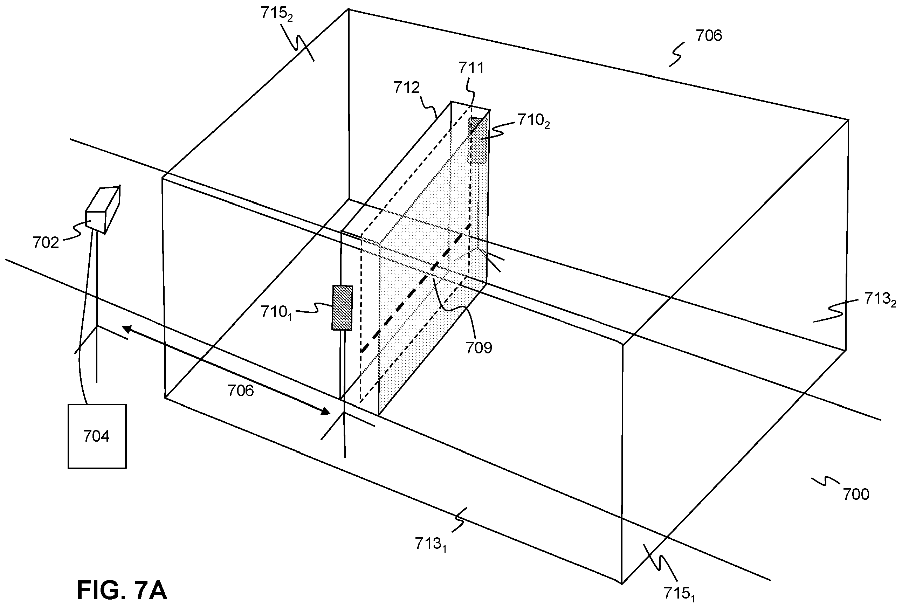

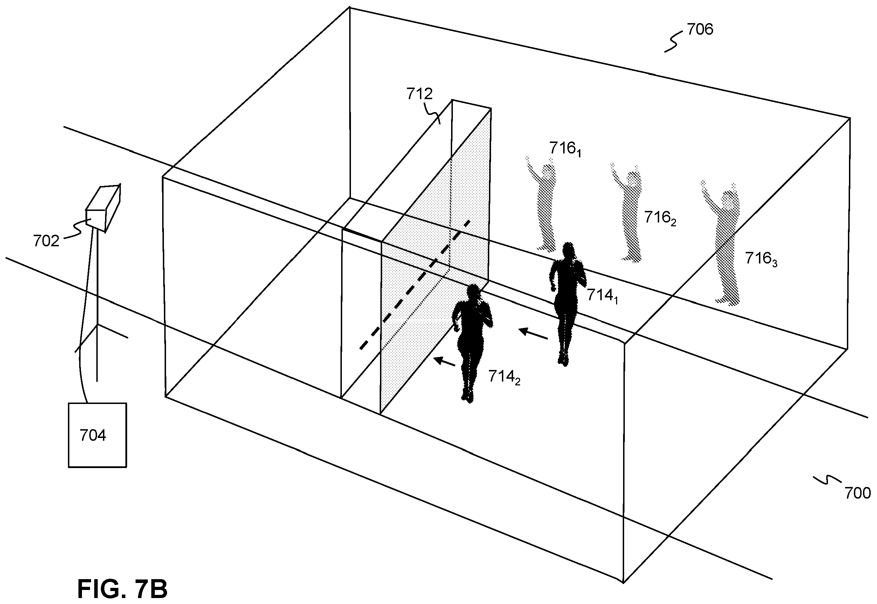

**Fig. 7A** and **7B** depict the calibration of the timing system and the operation of a calibrated timing system according to an embodiment of the invention. As shown in **Fig. 7A****,** a camera system **702** is positioned along a side of a track **706.** At a predetermined distance **706** one or more calibration markers **710_{1,2}** are positioned on one side of the track or on both sides of the track **700.** The field of view (FOV) of the camera may be positioned towards the track so that it captures a scene that includes the one or more calibration markers. Then, a calibration program is executed by the computer **704** of the camera system. During calibration, the camera generates video frames and, based on these generated video frames, depth information, e.g. depth maps, of the scene that includes the one or more calibration markers is determined (as e.g. described with reference to **Fig. 2** and **3**). Further, an object detection program may be used to detect the one or more calibration markers in the video frames (e.g. the RGB pictures).

Any type of marker may be used for calibration, e.g. an existing object, e.g. a tree, a traffic sign or a pole, on the side of the track. In a further embodiment, geo-coordinates may be used as calibration markers. In such case, the camera may be associated with a geo-coordinate using e.g. GPS or the like and a line or plane across a track that is visible in the FOV of the camera may define may be defined by one or more geocoordinates relative to the geo-coordinates of the camera.

Alternatively and/or in addition, specifically designed calibration marks may be used. For example, in an embodiment, calibration markers may be designed to have features that allow accurate calibration under different outdoor conditions. For example, the shape, edges and/or colors of the marker may be designed to allow accurate detection in the pictures. The depth map associated with the video frames may be used to determine the distance between the camera and the detected calibration markers. Alternatively, if a sufficiently accurate depth map can be constructed, an object detection program may also determine the position the calibration markers directly based on the depth map.

Once the position of the one or more markers has been detected by the computer, it may determine a virtual timing line across the track **700.** The virtual timing line may be a virtual line **709** or virtual plane **711** across the track located at a predetermined position relative to the position of the one or more markers. In an embodiment, the virtual timing line may be a line that extends from a marker positioned at a first side of the track in a direction across the track to the other side of the track. In another embodiment, the virtual timing line may extend from a first marker at one side of the track to a second marker at the other side of the track. The virtual timing line or virtual timing plane may be used as the location at which the timing system determines a passing time. In an embodiment, the virtual line or plane may be positioned within a rectangular 3D volume **712** in space, wherein the width of the volume may be determined by the calibration markers and the height and the depth of the volume may be determined by the computer. The 3D volume may define a 3D detection zone in which the timing system will acquire the video data (e.g. a plurality of video frames) for accurately determining a passing time and for identifying the object associated with the passing time.

In addition to the timing line, the calibration process may also be used to determine a virtual timing zone **706** which is positioned across the track and along the track at a predetermined position relative to the one or more markers. In an embodiment, the virtual timing zone may define a 3D volume of interest VOI in which the virtual timing line or plane is positioned. In another embodiment, the virtual timing zone may be 2D virtual timing area in which the virtual timing line or plane is positioned. In an embodiment, the one or more markers may define the position and/or (part of) the dimensions of the virtual timing zone. For example, after positioning and detection of the markers, the calibration program may generate a virtual timing zone of a certain width and length and, optionally, height, based the position of the one or more markers. As the markers are positioned along the edges of the track, the virtual timing zone may have sides that run substantially parallel to the edge of the track. This way, position information, e.g. coordinates, of a virtual timing zone that is positioned over the track can be determined during calibration using the one or more markers and stored in the memory of the timing system. This way, a calibrated timing system **702,704** as shown in **Fig. 7B** may use the virtual timing zone to spatially filter out detected objects **716₁₋₃** in images that are outside the virtual timing zone and to track, identify and time objects **714_{1,2}** that are within the virtual timing zone.

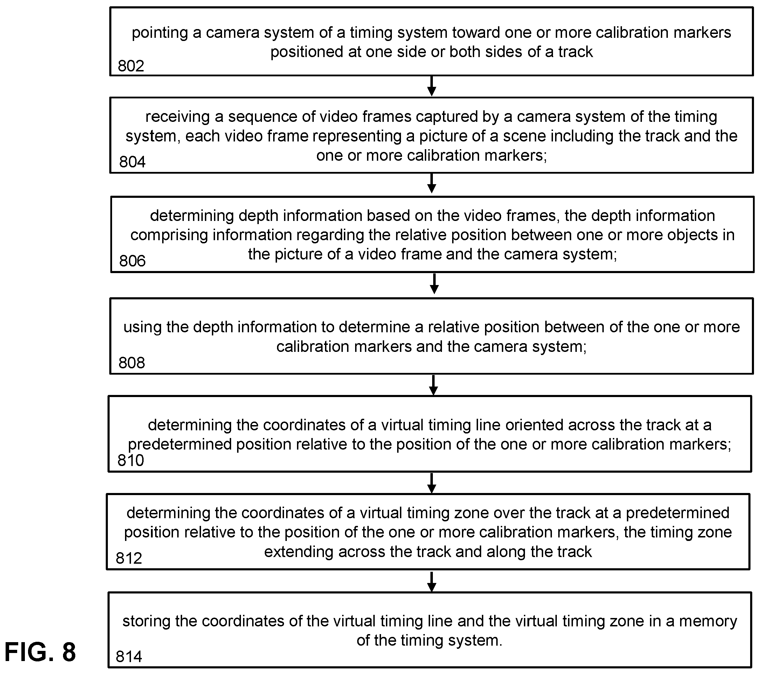

**Fig. 8** depicts a flow-diagram of a method of calibrating a timing system according to an embodiment of the invention. This method may be used for calibrating a timing system comprising calibration markers as described with reference to **Fig. 7A****.** As shown in the flow-diagram, the method may start with pointing a 3D camera system of a timing system toward one or more calibration markers positioned at opposite sides of a track. The calibration markers may indicate the position of a virtual plane that is located between the calibration markers and across the sports track (step **802**). In the next step **804,** a sequence of video frames may be captured by the 3D camera system, wherein each video frame may represent a picture of scene including the track and the one or more calibration markers.

Thereafter, a depth map may be determined based on the video frames, the depth map may comprise information regarding the distance between one or more objects in the picture and the 3D camera system (step **806**). For example, a depth map may be generated based on two video frames generated by two camera modules in the stereo camera and disparity mapping may be used to generate the depth map in the same way as described with reference to **Fig. 2** and **3** above. The depth information may include a depth map comprising for each video frame (or at least a substantial part thereof) information regarding the distance between objects in the captured video frames and the 3D camera system. The depth information may be used to determine the relative position (distance) between each of the one or more calibration markers and the 3D camera (step **808**).

Then, coordinates of a virtual timing line across the track may be computed that is positioned relative to the one or more calibration markers, e.g. between calibration markers at opposite side of the track. The virtual timing line may be used by the timing system to determine a passing time of objects passing the virtual plane (step **810**). Further, on the basis of the positions of the calibration markers position information, e.g. coordinates or information to compute coordinates, of a virtual timing zone, e.g. a 2D area or a 3D volume, that is oriented over the sports track may be computed (step **812**). In an embodiment, the virtual timing line may be positioned within the virtual timing zone, which defines a zone where objects are tracked, identified, and timed when passing the virtual timing line. The coordinates of the virtual timing line and the virtual timing zone may be stored in a memory of the timing system (step **814**).

In operation, a calibrated timing system no longer needs the calibration markers. The calibrated camera system will use the calibration data defining the virtual timing line and the virtual timing zone to efficiently determine a passing time and one or more identification features of an object that is passing the virtual timing line.

It is submitted that the calibration process depicted in **Fig. 8** is only one of many different ways to calibrate the camera with respect a line or plane that is used for determining a passing time. For example, calibration of the camera system may be realized based on a geo-located camera system and one or more geo-coordinates defining a virtual line or plane across the track at a predetermined distance from the camera.

A calibration process may be used to install and calibrate one or more further camera systems along the track so that each of these camera systems may capture video frames of objects passing a timing line. The camera system may (wirelessly) communicate with each other that the video capturing process can be time-synchronized. This way, at one time instance, each of the camera systems will procedure one or more time-stamped video frames of the sports track. The time-stamped video frames (and associated depth maps) of the different viewing angles may be used for determining passing times of objects passing the virtual plane and identification of objects for which a passing time has been determined.

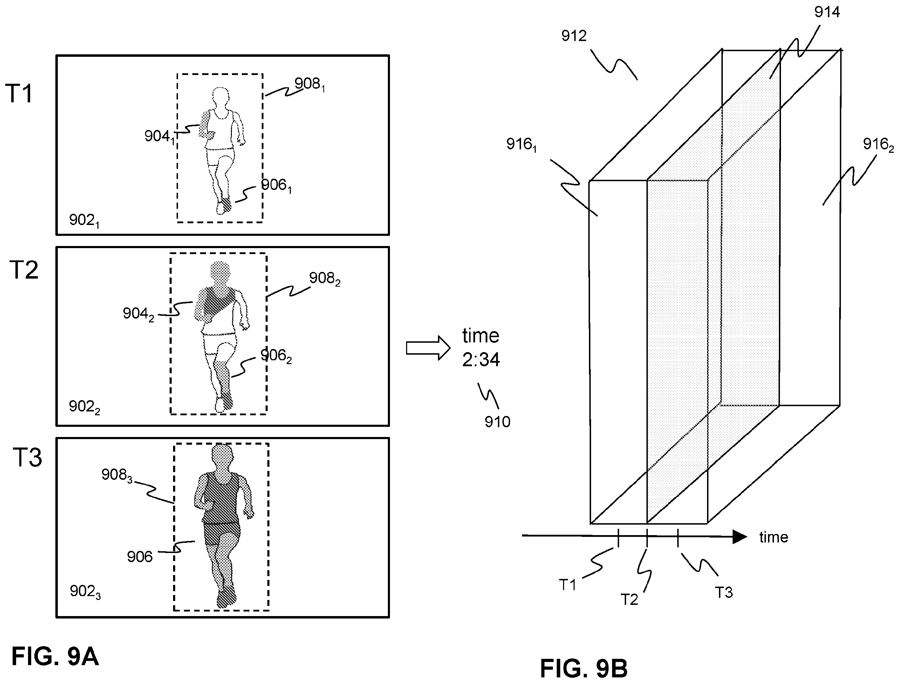

**Fig. 9A** and **9B** illustrate the working of the timing system according to an embodiment of the invention. **Fig. 9A** shows three snapshots of a moving object (in this case an athlete) passing a 3D detection zone of a timing a system as described within reference to the embodiments of this application. The 3D detection zone may be set up using a calibration method as referred above with reference to **Fig. 7A****.** As shown in **Fig. 9B****,** the 3D detection zone **912** may include a virtual plane **914** located across the track wherein the normal of the virtual plane is substantially parallel to the direction of the sports track. The virtual plane divides the 3D detection zone in a first part **916₁** in which the object moves towards the virtual plane and crosses it and a second part **916₂** in which the moving object crosses the virtual plane and moves away from it.

Thus, when an object moves along the track, the 3D camera system will capture images (pairs of images in case of a stereo camera) of a scene that includes the 3D detection zone. For each image (video frame) the 3D image system may compute a depth map. An object detection and tracking algorithm may be used to detect and track a predetermined object, e.g. a human object or an object representing an object, in subsequent video frames.

Based on the depth maps, the computer may determine that a detected object enters the first part of the 3D detection zone. In that case, the computer may start storing video frames and associated depth maps in a buffer until the object leaves the 3D detection zone via the second part. In another embodiment, only the pairs of video frames are stored, and the depth maps are determined later. These video frames and depth maps may be used by the computer to determine a passing time and to identify the object associated with the passing time.

**Fig. 9A** depicts three samples **902₁₋₃** of a sequence of time-stamped video frames when the athlete moves through the 3D detection zone. These video frames that may be captured by the camera system and stored in the computer. As shown in **Fig. 9B****,** the first video frame **902₁** is captured at time instance T1, i.e. the time that most part of the body of the athlete was still in the first part **916₁** of the 3D detection zone. At time instance T2, a second video frame **902₂** is captured wherein the athlete moves further and passes the virtual plane **914** of the 3D detection zone. Finally, at time instance T3, a third video frame **902₃** is captured wherein the athlete has moved into the second part **916₂** of the 3D detection zone.

A passing time module in the computer of the timing system may analyse the sequence of time-stamped video frames to determine at what time instance the athlete has passed the virtual plane. To that end, an object detection and classification algorithm may be applied to each video frame. The algorithm may determine for example in the video frame region of interests **908₁₋₃** (ROIs) that belong to an object. Further, for each of these ROIs, the algorithm may classify pixels as belonging to the athlete or not (the background).

Further, a depth map associated with each of the video frames may be used to determine distance values belonging to pixels that are classified as belonging to the object. These distance values may be compared with the distance between the camera and the virtual plane. This way, when the 3D camera system captures an object crossing the virtual plane, for each video frame the part of the pixels of the object that have crossed the virtual plane can be determined. This is visible in the video frames of **Fig. 9A** wherein the grey areas define pixels of (parts of) the object that have crossed the virtual plane.

For the video frame at time instance T1 only pixels **904₁** representing part of a hand and pixels **906₁** representing a shoe of the athlete are associated with distance values smaller than the distance between the virtual plane and the 3D camera system. Similarly, for the video frame at time instance T2, pixels **904₁** representing part of the upper body and pixels **906₂** representing part of a leg are associated with distance values smaller than the distance between the virtual plane and the 3D camera system. Finally, for the video frame at T3 all pixels **908** representing the athlete are associated with distance values smaller than the distance between the virtual plane and the 3D camera system. Based on this analysis, the computer may determine that at T2, a substantial part of the body of the athlete has crossed the virtual plane. For example, the computer may determine that if a part of object that has crossed the virtual plane is larger than a certain threshold value that in that case, it is determined that the athlete has crossed the plane. Hence, the time-stamp T2 may in that case define the passing time **510,** in this example 2:34. Different rules may be defined in order to determine if an object has crossed the virtual plane.

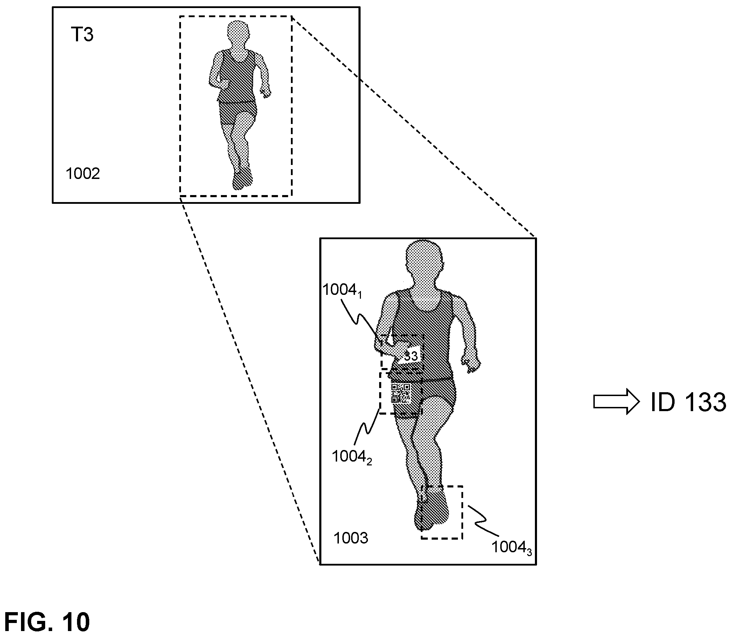

**Fig. 10** depicts a method of identification of a timed object according to an embodiment of the invention. Once a passing time for an object has been established, the identity of the object may be established. To that end, the stored video frames video frames may be analysed by an object identification module. The regions of interest (ROIs) in the video frames may be subjected to a feature analysis process which searches for predetermined features in a ROI. For example, as shown in **Fig. 10****,** the ROI **1003** of video frame T3 **1002** from **Fig. 9A** may be subjected to a feature analysis algorithm which may be configured to identify predetermined features such as predetermined markers, e.g. a bib **1004₁** or a code such as a QR code **1004₂.** Any uniquely identification feature may be used include shoe type **1004₃,** biometric markers, a coloured or specially shaped markers or a combination thereof. The analysis may be performed based on a set of ROIs from different video frames during the passing of the 3D detection zone. It may be frequently the case, that the video frame that is used for determining the passing time, is not suitable for identification purposes. Hence, object identification module may determine that the time-stamped video frame (e.g. video frame at T2 in the example of **Fig. 9A**) represents a picture of the object crossing the virtual plane is not suitable for reliable identification of the object. In that case, it may determine one or more other video frames (e.g. video frame at T3 in the example of **Fig. 9A**) are suitable for reliable identification of the timed object. Any known object detection algorithm may be used for identifying features in the ROI, including conventional computer vision algorithms, machine learning and deep learning techniques. For example, in an embodiment, one or more deep neural network may be used for determining a ROI in a video frame, that comprises the object, and for determining certain features associated with an object.

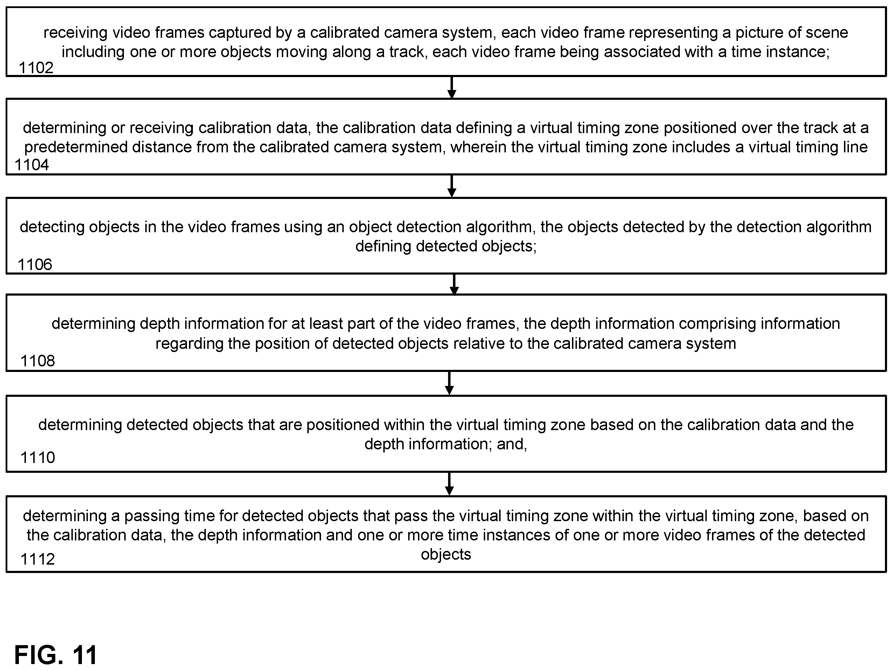

**Fig. 11** depicts a flow diagram of determining a passing time using a calibrated vision-based timing system according to the embodiments described in this application. As shown in this figure, the method may start with receiving a sequence of video frames captured by at least one camera system, each video frame representing a picture of scene of objects, for example persons, animals or vehicles, moving along a track (step **1102**). Each these video frame may be associated with a real-time clock. For example, each video frame may be time-stamped using a clock of the timing system.

In a further step **1104,** the method may include determining or receiving calibration data, e.g. pre-defined calibration data, which may define a virtual timing zone positioned over the track at a predetermined distance from the calibrated camera system, wherein the virtual timing zone includes a virtual timing line. In an embodiment, the calibration data may include position information, e.g. coordinates, of the virtual timing zone, e.g. a 2D area over and along the track or a 3D volume positioned over and along the track. The calibration data may be stored in a memory of the timing system and retrieved when the timing process is executed.

Objects in the video frames may be detected using an object detection algorithm, the objects detected by the detection algorithm defining one or more detected objects (step **1106**). Thus, within each video frame a plurality of objects may be identified using a known object detection algorithm and a relative position between the identified object and the camera system may be determined. In an embodiment, the object detection step may include determining regions of interest ROIs comprising the object and for each ROI subjecting the pixels in the ROI to a classification algorithm for classifying whether a pixel represents part of the object or part of the background.

Further, depth information, such as one or more depth maps, may be determined for the sequence of video frames, wherein the depth information may comprise information regarding the position of detected objects in the video frames relative to the camera system (step **1108**). Typically, the 3D camera system may be a stereo camera so that it produces pairs of video frames which can be used to determine a depth map. Alternatively, any other camera system that can produce depth information associated with captured video frames may be used.

The calibration data and the depth information may then be used to determine if the detected objects that are positioned within the virtual timing zone based (step **1110**). Finally, a passing time for detected objects that pass the virtual timing zone within the virtual timing zone may be determined based on the calibration data (in particular the position information of the timing line), the depth information and one or more time instances of one or more video frames of the detected objects (step **1112**).

The method provides an efficient way of determining passing times using a vision-based timing system for crowded timing locations, e.g. the finish of a mass sports event such as a marathon. The virtual timing zone is used to spatially filter out a substantial part of detected objects that are not participates of the sports event that is timed so that computational resources are only assigned to detection, timing and identification of athletes captured by the 3D camera of the timing system. The method further provides a vision-based timing scheme that is privacy friendly in the sense that it only applies identification algorithms to detected objects in the video frames that represent athletes.

The passing of an object over the virtual timing line may be determined by comparing a distance between the 3D camera system and the virtual timing line with the distance between the 3D camera system and detected objects within the virtual timing zone. A passing time may then be determined based on time information, for example time instances, e.g. time stamps, associated with video frames comprising a detected object passing the virtual timing line. For example, to that end, one or more video frames may be determined wherein a part of the object that has passed the virtual plane has certain dimensions.

Hence, certain rules may be used to determine if the object has passed the virtual plane. The time instance, e.g. time stamp, associated with the video frame that depicts that situation defines the passing time. Thereafter, a feature analysis algorithm may be applied to the one or more detected objects in the video frames, the feature analysis algorithm determining identifying features for the one or more detected objects in the video frames and the identity of the detected object for which the passing time is may be determined based on the identifying features of the detected object that has passed the timing line.

In an embodiment, the the object detection algorithm and the feature analysis algorithm may be part of a machine learning algorithm, preferably a deep learning algorithm such as a convolutional deep neural network system, that is trained to detected one or more objects in a video frame and to determine identifying features associated with detected objects.

Thus, different pictures from the sequence of video frames may be used by the identification of the object that has crossed the virtual plane at the passing time. Hence, the video frame that is used for determining the passing time of an object may be different from the one or more video frames that are used for determining the identity of the object.

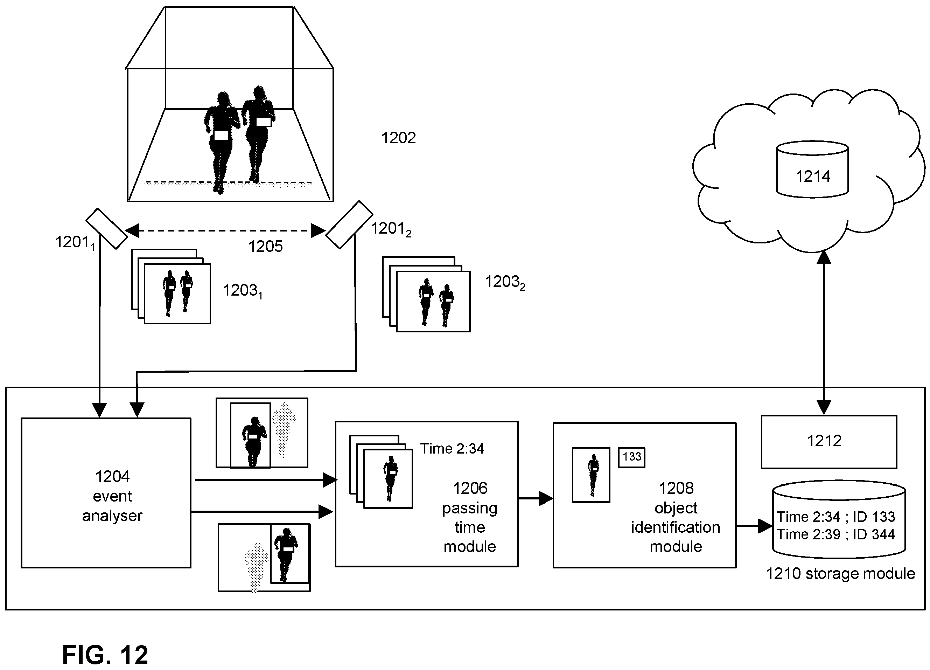

**Fig. 12** depicts a system for determining a passing time according to an embodiment of the invention. As shown in the figure, the system includes one or more camera systems **1201_{1,2}** connected to a computer system that is configured to control the camera systems and to process the video frames **1203_{1,2}** generated by the camera systems. Each of the camera systems is calibrated according to the calibration method as described in this application so that it captures a scene of a track comprising moving objects pass a time line represented by a virtual plane **1202.** The computer system may comprise an event analyser **1204** for performing object detection and feature analysis of the objects in the video frames using a suitable algorithm. The event analyser may further determine which detected objects are within a virtual timing zone position over the track. Calibration data that are stored in the memory of the system may comprise position information associated with the virtual timing zone. Further, the event analyser may generate depth information, e.g. depth maps, associated with the video frames. A passing module **1206** may determine a passing time for detected objects within the virtual timing zone based on the depth information and position information associated with the virtual timing line. Further, an object identification module **1208** may identify objects that are detected and associated with a passing time by the passing time module. The passage times and the ID's of the object that have passed may be stored in a memory of the computer. Additionally, a picture of the passing of the timed object may be stored. This information may be communicated via a (wireless) interface **1212** a network server **1214.**

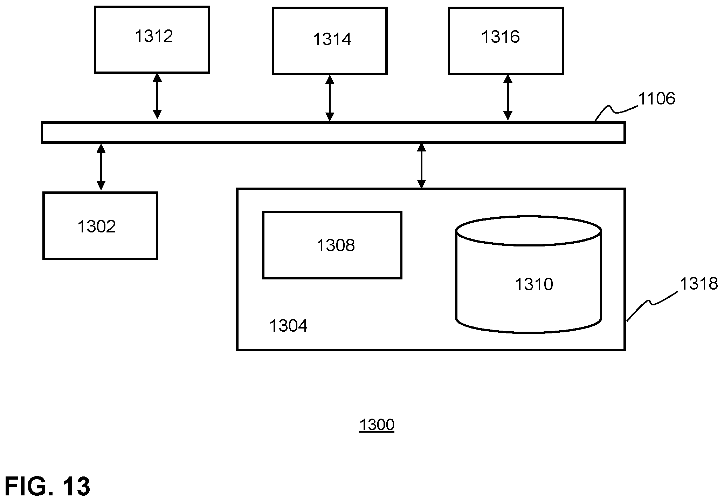

**Fig. 13** is a block diagram illustrating exemplary data processing systems described in this disclosure. Data processing system **1300** may include at least one processor **1302** coupled to memory elements **1304** through a system bus **1306.** As such, the data processing system may store program code within memory elements **1304.** Further, processor **1302** may execute the program code accessed from memory elements **1104** via system bus **1306.** In one aspect, data processing system may be implemented as a computer that is suitable for storing and/or executing program code. It should be appreciated, however, that data processing system **1300** may be implemented in the form of any system including a processor and memory that is capable of performing the functions described within this specification.

Memory elements **1304** may include one or more physical memory devices such as, for example, local memory **1308** and one or more bulk storage devices **1310.** Local memory may refer to random access memory or other non-persistent memory device(s) generally used during actual execution of the program code. A bulk storage device may be implemented as a hard drive or other persistent data storage device. The processing system **1300** may also include one or more cache memories (not shown) that provide temporary storage of at least some program code to reduce the number of times program code must be retrieved from bulk storage device **1310** during execution.

Input/output (I/O) devices depicted as input device **1312** and output device **1314** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1316** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **1100.**

As pictured in **FIG. 13****,** memory elements **1304** may store an application **1118.** It should be appreciated that data processing system **1300** may further execute an operating system (not shown) that can facilitate execution of the application. Application, being implemented in the form of executable program code, can be executed by data processing system **1300,** e.g., by processor **1302.** Responsive to executing application, data processing system may be configured to perform one or more operations to be described herein in further detail.

In one aspect, for example, data processing system **1300** may represent a client data processing system. In that case, application **1318** may represent a client application that, when executed, configures data processing system **1300** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1318,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention as defined in the appended claims. The embodiment was chosen and described in order to best explain the principles of the invention and the practical application, and to enable others of ordinary skill in the art to understand the invention for various embodiments with various modifications as are suited to the particular use contemplated.

## Claims

1. A method for determining a passing time of objects passing a virtual timing line, the method comprising:
receiving video frames captured by a calibrated camera system, each video frame representing a picture of scene including one or more objects moving on a track and objects outside of the track, each video frame being associated with a time instance, the calibrated camera system comprising calibration data defining a virtual timing zone in the video frames positioned at a predetermined distance from the calibrated camera system, the virtual timing zone extending across the track and extending along the sides of the track;
detecting objects in the video frames using an object detection algorithm, the objects detected by the detection algorithm defining detected objects;
determining depth information for at least part of the video frames, the depth information comprising information regarding the position of the detected objects relative to the calibrated camera system;
determining whether detected objects are positioned inside the virtual timing zone or outside the virtual timing zone based on the calibration data and the depth information, to spatially filter out detected objects outside the virtual timing zone;
applying a feature analysis algorithm to at least part of the detected objects in the video frames that are determined to be inside the virtual timing zone, the feature analysis algorithm determining identifying features for the one or more detected objects inside the virtual timing zone; and,
determining a passing time for detected objects that determined to be positioned inside the virtual timing zone and pass a virtual timing line across the track based on the calibration data, the depth information and one or more time instances of one or more video frames of the detected objects that pass the virtual timing line.

2. Method according to claim 1, wherein the width of the virtual timing zone is equal or larger than the width of the track and wherein the length of the virtual timing zone is equal or larger than the width of the track; and/or the virtual timing zone being substantially rectangularly shaped wherein long side of the rectangularly shaped virtual timing zone is aligned with the sides of the track.

3. Method according to claim 2 further comprising:
determining the identity of the detected objects based on the identifying features of the detected object, preferably based on the identifying features of detected objects that pass the timing line,
wherein the identifying features of a detected object preferably include one or more biometric identifiers of the detected object and/or one or more identification markers, preferably optically readable identification markers, such as a race bib or a printed mark and/or code; and/or, one or more characteristics about the shape and/or colour of the detected object.

4. Method according to any of claims 1-3, wherein the object detection algorithm is part of a machine learning algorithm, preferably a deep learning algorithm such as a convolutional deep neural network system, that is trained to detected one or more objects in one or more video frames.

5. Method according to any of claims 2-4, wherein the feature analysis algorithm is part of a machine learning algorithm, preferably a deep learning algorithm such as a convolutional deep neural network system, that is trained to determine identifying features associated with detected objects.

6. Method according to any of claims 1-5, wherein the calibration data include coordinates of a 2D area over the track and/or a 3D area over the track, the 2D/3D area defining a 2D/3D virtual timing zone, wherein the sides of the 2D/3D virtual timing zone extend substantially parallel to the sides of the track, preferably the sides of the 2D/3D virtual timing zone substantially coincide with the sides of the track.

7. Method according to any of claims 1-6, wherein determining detected objects that are positioned within the virtual timing zone includes:
using the depth information to determine position of the objects relative to the camera system;
determining based on the position and the coordinates of the virtual timing zone if an object is positioned in or outside the virtual timing zone.

8. Method according to any of claims 1-7, wherein detecting one or more objects in the video frames includes:
determining one or more regions of interest ROIs in a video frame, each ROI comprising pixels representing an object;
determine object features in one of the one or more ROIs; and,
determine an object in the ROI based on the determined object features.

9. Method according to any of claims 1-8, wherein the camera system comprises a plurality of camera modules, preferably two camera modules forming a stereo camera, the stereo camera being configured to generate at each time instance at least a first video frame and a second video frame of the scene and wherein the depth map is determined based on a disparity mapping algorithm configured to determine a disparity between pixels of the first and second video frame.

10. Method according to any of claims 1-9, wherein the passing time is determined based on at least one video frame of the scene wherein a predetermined part of the detected object that has passed the virtual plane.

11. A method for calibrating a timing system configured to determine a passing time of an object passing a timing line across a sports track, the method comprising:
receiving video frames, preferably a sequence of video frames, captured by a camera system, of a timing system, each video frame representing a picture of scene including the track and one or more calibration markers, preferably at least two calibration markers positioned at opposite sides of the track;
determining depth information, e.g. one or more depth maps, based on the video frames, the depth information comprising information regarding the distance between one or more objects in the picture of a video frame;
using the depth information to determine a relative position between of the one or more calibration markers and the camera system;
determining calibration data, the calibration data including position information of a virtual timing line oriented across the track at a predetermined position relative to the position of the one or more calibration markers;
and, position information associated with a virtual timing zone over the track at a predetermined position relative to the position of the one or more calibration markers, the timing zone extending across the track and along the track for spatially filtering out a detected object outside the virtual timing zone in a method according to any of claims 1 to 10; and,
storing the coordinates of the virtual plane in a memory of the timing system.

12. A system for determining a passing time of an object passing a timing line across a sports track comprising:
at least one camera system connected to a computer;
the computer comprising a computer readable storage medium having computer readable program code embodied therewith, and a processor, preferably a microprocessor, coupled to the computer readable storage medium,
wherein responsive to executing the computer readable program code, the processor is configured to perform executable operations comprising:
receiving video frames captured by a calibrated camera system, each video frame representing a picture of scene including one or more objects moving on a track and objects moving outside of the track, each video frame being associated with a time instance, the calibrated camera system comprising calibration data defining a virtual timing zone in the video frames positioned at a predetermined distance from the calibrated camera system, the virtual timing zone extending across the track and extending along the sides of the track;
detecting objects in the video frames using an object detection algorithm, the objects detected by the detection algorithm defining detected objects;
determining depth information for at least part of the video frames, the depth information comprising information regarding the position of the detected objects relative to the calibrated camera system;
determining whether detected objects are positioned inside the virtual timing zone or outside the virtual timing zone based on the calibration data and the depth information, to filter out detected objects outside the virtual timing zone;
applying a feature analysis algorithm to at least part of the detected objects in the video frames that are determined to be inside the virtual timing zone, the feature analysis algorithm determining identifying features for the one or more detected objects inside the virtual timing zone; and,
determining a passing time for detected objects that determined to be positioned inside the virtual timing zone and pass a virtual timing line across the track based on the calibration data, the depth information and one or more time instances of one or more video frames of the detected objects that pass the virtual timing line.

13. System according to claim 12 wherein the executable operations further comprise any of the method steps according to claims 2-10.

14. A calibration module for a timing system configured to determine a passing time of an object passing a timing line across a sports track, the module comprising:
processing means for receiving video frames, preferably a sequence of video frames, captured by a camera system of a timing system, each video frame representing a picture of scene including the track and one or more calibration markers, preferably at least two calibration markers being positioned at opposite sides of the track;
determining depth information, e.g. one or more depth maps, based on the video frames, the depth information comprising information regarding the distance between one or more objects in the picture of a video frame;
using the depth information to determine a relative position between of the one or more calibration markers and the camera system;
determining calibration data, the calibration data including position information of a virtual timing line oriented across the track at a predetermined position relative to the position of the one or more calibration markers;
and, position information associated with a virtual timing zone over the track at a predetermined position relative to the position of the one or more calibration markers, the timing zone extending across the track and along the track for spatially filtering out a detected object outside the virtual timing zone in a method according to any of claims 1 to 10; and,
storing the coordinates of the virtual plane in a memory of the timing system.

15. A non-transitory computer-readable storage medium storing at least one software code portion, the software code portion, when executed or processed by a computer of a system as defined in claim 12, is configured to perform the method steps according to any of claims 1-10.

## Patentansprüche

1. Verfahren zum Bestimmen der Durchgangszeit von Objekten, die eine virtuelle Zeitlinie passieren, wobei das Verfahren umfasst:
Empfangen von Videobildern, die von einem kalibrierten Kamerasystem aufgenommen wurden, wobei jedes Videobild ein Bild einer Szene mit einem oder mehreren Objekten, die sich auf einer Bahn bewegen, und Objekten außerhalb der Bahn darstellt und wobei jedem Videobild ein Zeitpunkt zugeordnet ist, wobei das kalibrierte Kamerasystem Kalibrierungsdaten umfasst, die eine virtuelle Zeitmesszone, die sich in einem vorbestimmten Abstand vom kalibrierten Kamerasystem befindet, in den Videobildern definieren, wobei sich die virtuelle Zeitmesszone über die Bahn und entlang ihrer Seiten erstreckt;
Erkennen von Objekten in den Videobildern mithilfe eines Objekterkennungsalgorithmus, wobei die vom Erkennungsalgorithmus erkannten Objekte als erkannte Objekte definiert werden;
Bestimmen von Tiefeninformationen für mindestens einen Teil der Videobilder, wobei die Tiefeninformationen Informationen über die Position der erkannten Objekte relativ zum kalibrierten Kamerasystem umfassen;
Bestimmen, ob sich erkannte Objekte innerhalb oder außerhalb der virtuellen Zeitmesszone befinden, basierend auf den Kalibrierungsdaten und den Tiefeninformationen, um erkannte Objekte außerhalb der virtuellen Zeitmesszone räumlich herauszufiltern;
Anwenden eines Merkmalanalysealgorithmus auf mindestens einen Teil der erkannten Objekte in den Videobildern, die sich innerhalb der virtuellen Zeitmesszone befinden, wobei der Merkmalanalysealgorithmus identifizierende Merkmale für das oder die erkannten Objekte innerhalb der virtuellen Zeitmesszone bestimmt; und
Bestimmen einer Durchgangszeit für erkannte Objekte, die sich als innerhalb der virtuellen Zeitmesszone befindend bestimmt sind und eine virtuelle Zeitlinie quer über die Bahn passieren, basierend auf den Kalibrierungsdaten, den Tiefeninformationen und einem oder mehreren Zeitpunkten eines oder mehrerer Videobilder der erkannten Objekte, welche die virtuelle Zeitlinie passieren.

2. Verfahren nach Anspruch 1, wobei die Breite der virtuellen Zeitmesszone gleich oder größer als die Breite der Bahn ist und wobei die Länge der virtuellen Zeitmesszone gleich oder größer als die Breite der Bahn ist; und/oder die virtuelle Zeitmesszone im Wesentlichen rechteckig ist, wobei die lange Seite der rechteckigen virtuellen Zeitmesszone mit den Seiten der Bahn ausgerichtet ist.

3. Verfahren nach Anspruch 2, ferner umfassend:
Bestimmen der Identität der erkannten Objekte anhand ihrer Identifikationsmerkmale, vorzugsweise anhand der Identifikationsmerkmale von Objekten, die die Zeitlinie passieren,
wobei die Identifikationsmerkmale eines erkannten Objekts vorzugsweise einen oder mehrere biometrische Identifikatoren und/oder eine oder mehrere Identifikationsmarkierungen, vorzugsweise optisch lesbare Identifikationsmarkierungen wie eine Startnummer oder eine gedruckte Markierung und/oder ein Code, und/oder ein oder mehrere Merkmale in Bezug auf die Form und/oder die Farbe des erkannten Objekts umfassen.

4. Verfahren nach einem der Ansprüche 1 bis 3, wobei der Objekterkennungsalgorithmus Teil eines Algorithmus für maschinelles Lernen, vorzugsweise ein Deep-Learning-Algorithmus wie ein Convolutional Neural Network-System, ist, der darauf trainiert ist, ein oder mehrere Objekte in einem oder mehreren Videobildern zu erkennen.

5. Verfahren nach einem der Ansprüche 2 bis 4, wobei der Merkmalanalysealgorithmus Teil eines Algorithmus für maschinelles Lernen, vorzugsweise ein Deep-Learning-Algorithmus wie ein Convolutional Neural Network-System, ist, der darauf trainiert ist, die mit erkannten Objekten verbundenen Identifikationsmerkmale zu bestimmen.

6. Verfahren nach einem der Ansprüche 1 bis 5, wobei die Kalibrierungsdaten Koordinaten eines 2D-Bereichs über der Bahn und/oder eines 3D-Bereichs über der Bahn umfassen, wobei der 2D/3D-Bereich eine virtuelle 2D/3D-Zeitmesszone definiert, wobei sich die Seiten der virtuellen 2D/3D-Zeitmesszone im Wesentlichen parallel zu den Seiten der Bahn erstrecken, wobei die Seiten der virtuellen 2D/3D-Zeitmesszone vorzugsweise im Wesentlichen mit den Seiten der Bahn übereinstimmen.

7. Verfahren nach einem der Ansprüche 1 bis 6, wobei das Bestimmen erkannter Objekte, die sich innerhalb der virtuellen Zeitmesszone befinden, umfasst:
Verwenden der Tiefeninformationen zum Bestimmen der Position der Objekte relativ zum Kamerasystem;
Bestimmen, basierend auf der Position und der Koordinaten der virtuellen Zeitmesszone, ob sich ein Objekt innerhalb oder außerhalb der virtuellen Zeitmesszone befindet.

8. Verfahren nach einem der Ansprüche 1 bis 7, wobei das Erkennen eines oder mehrerer Objekte in den Videobildern umfasst:
Bestimmen eines oder mehrerer Bereiche von Interesse (ROIs) in einem Videobild, wobei jeder ROI Pixel umfasst, die ein Objekt darstellen;
Bestimmen von Objektmerkmalen in einem oder mehreren ROIs; und
Bestimmen eines Objekts im ROI basierend auf den bestimmten Objektmerkmalen.

9. Verfahren nach einem der Ansprüche 1 bis 8, wobei das Kamerasystem mehrere Kameramodule umfasst, vorzugsweise zwei Kameramodule, die eine Stereokamera bilden, wobei die Stereokamera so konfiguriert ist, dass sie zu jedem Zeitpunkt mindestens ein erstes und ein zweites Videobild der Szene erzeugt und wobei die Tiefenkarte basierend auf einem Disparitätsabbildungsalgorithmus bestimmt wird, um eine Disparität zwischen Pixel des ersten und des zweiten Videobilds zu bestimmen.

10. Verfahren nach einem der Ansprüche 1 bis 9, wobei die Durchgangszeit basierend auf mindestens einem Videobild der Szene bestimmt wird, in dem ein vorbestimmter Teil des erfassten Objekts die virtuelle Ebene passiert hat.

11. Verfahren zum Kalibrieren eines Zeitmesssystems zum Bestimmen der Durchgangszeit eines Objekts, das eine Zeitmesslinie auf einer Sportbahn passiert, wobei das Verfahren umfasst:
Empfangen von Videobildern, vorzugsweise einer Sequenz von Videobildern, die von einem Kamerasystem des Zeitmesssystems aufgenommen wurden, wobei jedes Videobild ein Bild der Szene mit der Bahn und einem oder mehreren Kalibrierungsmarkern darstellt, vorzugsweise mindestens zwei Kalibrierungsmarkern, die sich an gegenüberliegenden Seiten der Bahn befinden;
Bestimmen von Tiefeninformationen, z. B. einer oder mehrerer Tiefenkarten, basierend auf den Videobildern, wobei die Tiefeninformationen Informationen über den Abstand zwischen einem oder mehreren Objekten im Bild eines Videobildes enthalten;
Verwenden der Tiefeninformationen, um eine relative Position zwischen dem einen oder den mehreren Kalibrierungsmarkern und dem Kamerasystem zu bestimmen.
Bestimmen von Kalibrierdaten, wobei die Kalibrierdaten Positionsinformationen einer virtuellen Zeitmesslinie, die quer über die Bahn an einer vorbestimmten Position relativ zur Position der einen oder der mehreren Kalibriermarken ausgerichtet ist;
und Positionsinformationen umfassen, die einer virtuellen Zeitmesszone über der Bahn an einer vorbestimmten Position relativ zur Position der einen oder der mehreren Kalibriermarken zugeordnet sind, wobei sich die Zeitmesszone quer über die Bahn und entlang der Bahn erstreckt, um ein außerhalb der virtuellen Zeitmesszone erfasstes Objekt in einem Verfahren nach einem der Ansprüche 1 bis 10 räumlich herauszufiltern; und
Speichern der Koordinaten der virtuellen Ebene in einem Speicher des Zeitmesssystems.

12. System zur Bestimmung der Durchgangszeit eines Objekts, das eine Zeitmesslinie quer über eine Sportbahn passiert, umfassend:
mindestens ein mit einem Computer verbundenes Kamerasystem;
wobei der Computer ein computerlesbares Speichermedium mit darauf enthaltenem computerlesbarem Programmcode und einen Prozessor, vorzugsweise einen Mikroprozessor, der mit dem computerlesbaren Speichermedium verbunden ist, umfasst,
wobei der Prozessor, der zum Ausführen des computerlesbaren Programmcodes geeignet ist, so konfiguriert ist, um ausführbare Operationen durchzuführen, die umfassen:
Empfangen von Videobildern, die von einem kalibrierten Kamerasystem aufgenommen wurden, wobei jedes Videobild eine Szene mit einem oder mehreren Objekten, die sich auf einer Bahn bewegen, und Objekten, die sich außerhalb der Bahn bewegen, darstellt, wobei jedes Videobild einem Zeitpunkt zugeordnet ist, wobei das kalibrierte Kamerasystem Kalibrierungsdaten umfasst, die eine virtuelle Zeitmesszone in den Videobildern definieren, die sich in einem vorbestimmten Abstand vom kalibrierten Kamerasystem befindet, wobei sich die virtuelle Zeitmesszone über die Bahn und entlang der Seiten der Bahn erstreckt;
Erkennen von Objekten in den Videobildern unter Einsatz eines Objekterkennungsalgorithmus, wobei die vom Erkennungsalgorithmus erkannten Objekte als erkannte Objekte definiert werden;
Bestimmen von Tiefeninformationen für mindestens einen Teil der Videobilder, wobei die Tiefeninformationen Informationen über die Position der erkannten Objekte relativ zum kalibrierten Kamerasystem umfassen;
Ermitteln, ob sich erkannte Objekte innerhalb oder außerhalb der virtuellen Zeitmesszone befinden, basierend auf den Kalibrierungsdaten und den Tiefeninformationen, um erkannte Objekte außerhalb der virtuellen Zeitmesszone herauszufiltern;
Anwenden eines Merkmalanalysealgorithmus auf mindestens einen Teil der erkannten Objekte in den Videobildern, die sich innerhalb der virtuellen Zeitmesszone befinden, wobei der Merkmalanalysealgorithmus identifizierende Merkmale für das eine oder die mehreren erkannten Objekte innerhalb der virtuellen Zeitmesszone ermittelt; und
Ermitteln der Durchgangszeit für erkannte Objekte, die sich innerhalb der virtuellen Zeitmesszone befinden und eine virtuelle Zeitlinie quer über die Bahn passieren, basierend auf den Kalibrierungsdaten, den Tiefeninformationen und einem oder mehreren Zeitpunkten eines oder mehrerer Videobilder der erkannten Objekte, welche die virtuelle Zeitlinie passieren.

13. System nach Anspruch 12, wobei die ausführbaren Operationen ferner einen der Verfahrensschritte nach den Ansprüchen 2 bis 10 umfassen.

14. Kalibrierungsmodul für ein Zeitmesssystem, das konfiguriert ist, um eine Durchgangszeit eines Objekts, das eine Zeitmesslinie auf einer Sportbahn überquert, zu bestimmen, wobei das Modul umfasst:
Verarbeitungsmittel zum Empfangen von Videobildern, vorzugsweise einer Sequenz von Videobildern, die von einem Kamerasystem des Zeitmesssystems aufgenommen wurden, wobei jedes Videobild ein Bild der Szene darstellt, das die Bahn und eine oder mehrere Kalibrierungsmarken, vorzugsweise mindestens zwei Kalibrierungsmarken, die an gegenüberliegenden Seiten der Bahn positioniert sind, umfasst;
zum Bestimmen von Tiefeninformationen, z. B. einer oder mehrerer Tiefenkarten, basierend auf den Videobildern, wobei die Tiefeninformationen Informationen über den Abstand zwischen einem oder mehreren Objekten im Bild eines Videobildes umfassen;
zum Verwenden der Tiefeninformationen, um eine relative Position zwischen der einen oder den mehreren Kalibriermarken und dem Kamerasystem zu bestimmen;
zum Bestimmen von Kalibrierdaten, wobei die Kalibrierdaten Positionsinformationen einer virtuellen Zeitmesslinie umfassen, die quer zur Bahn an einer vorbestimmten Position relativ zur Position der einen oder der mehreren Kalibriermarken ausgerichtet ist;
und Positionsinformationen, die einer virtuellen Zeitmesszone über der Bahn an einer vorbestimmten Position relativ zur Position der einen oder der mehreren Kalibriermarken zugeordnet sind, wobei sich die Zeitmesszone quer zur Bahn und entlang der Bahn zum räumlichen Herausfiltern eines erkannten Objekts außerhalb der virtuellen Zeitmesszone in einem Verfahren nach einem der Ansprüche 1 bis 10 erstreckt; und
zum Speichern der Koordinaten der virtuellen Ebene in einem Speicher des Zeitmesssystems.

15. Nichtflüchtiges computerlesbares Speichermedium, das mindestens einen Softwarecodeabschnitt speichert, wobei der Softwarecodeabschnitt, wenn er von einem Computer eines Systems gemäß Anspruch 12 ausgeführt oder verarbeitet wird, so konfiguriert ist, dass er die Verfahrensschritte nach einem der Ansprüche 1 bis 10 durchführt.

## Revendications

1. Procédé permettant de déterminer un temps de passage d'objets passant devant une ligne de chronométrage virtuelle, le procédé comprenant les étapes consistant à :
recevoir des trames vidéo capturées par un système de caméra étalonné, chaque trame vidéo représentant une image de scène comprenant un ou plusieurs objets se déplaçant sur une piste et des objets à l'extérieur de la piste, chaque trame vidéo étant associée à une instance de chronométrage, le système de caméra étalonné comprenant des données d'étalonnage définissant une zone de chronométrage virtuelle dans les trames vidéo positionnées à une distance prédéterminée du système de caméra étalonné, la zone de chronométrage virtuelle s'étendant sur la piste et le long des côtés de la piste ;
détecter des objets dans les trames vidéo à l'aide d'un algorithme de détection d'objets, les objets détectés par l'algorithme de détection définissant les objets détectés ;
déterminer des informations de profondeur pour au moins une partie des trames vidéo, les informations de profondeur comprenant des informations concernant la position des objets détectés par rapport au système de caméra étalonné ;
déterminer si les objets détectés sont positionnés à l'intérieur de la zone de chronométrage virtuelle ou à l'extérieur de la zone de chronométrage virtuelle sur la base des données d'étalonnage et des informations de profondeur, afin de filtrer spatialement les objets détectés à l'extérieur de la zone de chronométrage virtuelle ;
appliquer un algorithme d'analyse de caractéristiques à au moins une partie des objets détectés dans les trames vidéo qui sont déterminées comme étant à l'intérieur de la zone de chronométrage virtuelle, l'algorithme d'analyse de caractéristiques déterminant les caractéristiques d'identification pour l'objet ou les objets détectés à l'intérieur de la zone de chronométrage virtuelle ;
déterminer un temps de passage pour des objets détectés qui ont été déterminés comme étant positionnés à l'intérieur de la zone de chronométrage virtuelle et qui passent une ligne de chronométrage virtuelle à travers la piste sur la base des données d'étalonnage, des informations de profondeur et d'une ou plusieurs instances de chronométrage d'une ou plusieurs trames vidéo des objets détectés qui passent la ligne de chronométrage virtuelle.

2. Procédé selon la revendication 1, dans lequel la largeur de la zone de chronométrage virtuelle est égale ou supérieure à la largeur de la piste et la longueur de la zone de chronométrage virtuelle est égale ou supérieure à la largeur de la piste ; et/ou la zone de chronométrage virtuelle a une forme sensiblement rectangulaire, le côté long de la zone de chronométrage virtuelle de forme rectangulaire étant aligné avec les côtés de la piste.

3. Procédé selon la revendication 2, comprenant en outre :
la détermination de l'identité des objets détectés sur la base des caractéristiques d'identification de l'objet détecté, de préférence sur la base des caractéristiques d'identification des objets détectés qui passent devant la ligne de chronométrage,
les caractéristiques d'identification d'un objet détecté comprenant de préférence un ou plusieurs identifiants biométriques de l'objet détecté et/ou un ou plusieurs marqueurs d'identification, de préférence des marqueurs d'identification lisibles optiquement, tels qu'un dossard de course ou une marque imprimée et/ou un code ; et/ou une ou plusieurs caractéristiques concernant la forme et/ou la couleur de l'objet détecté.

4. Procédé selon l'une quelconque des revendications 1 à 3, dans lequel l'algorithme de détection d'objet fait partie d'un algorithme d'apprentissage automatique, de préférence un algorithme d'apprentissage profond tel qu'un système de réseau neuronal profond convolutif, qui est entraîné pour détecter un ou plusieurs objets dans une ou plusieurs trames vidéo.

5. Procédé selon l'une quelconque des revendications 2 à 4, dans lequel l'algorithme d'analyse de caractéristiques fait partie d'un algorithme d'apprentissage automatique, de préférence un algorithme d'apprentissage profond tel qu'un système de réseau neuronal profond convolutif, qui est entraîné pour déterminer des caractéristiques d'identification associées à des objets détectés.

6. Procédé selon l'une quelconque des revendications 1 à 5, dans lequel les données d'étalonnage comprennent des coordonnées d'une zone 2D sur la piste et/ou d'une zone 3D sur la piste, la zone 2D/3D définissant une zone de chronométrage virtuelle 2D/3D, les côtés de la zone de chronométrage virtuelle 2D/3D s'étendant sensiblement parallèlement aux côtés de la piste, les côtés de la zone de chronométrage virtuelle 2D/3D coïncidant de préférence sensiblement avec les côtés de la piste.

7. Procédé selon l'une quelconque des revendications 1 à 6, dans lequel la détermination d'objets détectés qui sont positionnés à l'intérieur de la zone de chronométrage virtuelle comprend les étapes consistant à :
utiliser les informations de profondeur pour déterminer la position des objets par rapport au système de caméras ;
déterminer, en fonction de la position et des coordonnées de la zone de chronométrage virtuelle, si un objet est positionné à l'intérieur ou à l'extérieur de la zone de chronométrage virtuelle.

8. Procédé selon l'une quelconque des revendications 1 à 7, dans lequel la détection d'un ou plusieurs objets dans les trames vidéo comprend les étapes consistant à :
déterminer une ou plusieurs régions d'intérêt ROI dans une trame vidéo, chaque région d'intérêt comprenant des pixels représentant un objet ;
déterminer des caractéristiques d'objet dans une ou plusieurs des ROI ; et
déterminer un objet dans la ROI en fonction des caractéristiques d'objet déterminées.

9. Procédé selon l'une quelconque des revendications 1 à 8, dans lequel le système de caméra comprend une pluralité de modules de caméra, de préférence deux modules de caméra formant une caméra stéréo, la caméra stéréo étant configurée pour générer à chaque instant au moins une première trame vidéo et une seconde trame vidéo de la scène et la carte de profondeur est déterminée sur la base d'un algorithme de mappage de disparité configuré pour déterminer une disparité entre des pixels des première et seconde trames vidéo.

10. Procédé selon l'une quelconque des revendications 1 à 9, dans lequel le temps de passage est déterminé sur la base d'au moins une trame vidéo de la scène, une partie prédéterminée de l'objet détecté ayant dépassé le plan virtuel.

11. Procédé d'étalonnage d'un système de chronométrage configuré pour déterminer un temps de passage d'un objet passant devant une ligne de chronométrage sur une piste de sport, le procédé comprenant les étapes consistant à :
recevoir des trames vidéo, de préférence une séquence de trames vidéo, capturées par un système de caméra, d'un système de chronométrage, chaque trame vidéo représentant une image de scène comprenant la piste et un ou plusieurs marqueurs d'étalonnage, de préférence au moins deux marqueurs d'étalonnage positionnés sur des côtés opposés de la piste ;
déterminer des informations de profondeur, par exemple une ou plusieurs cartes de profondeur, sur la base des trames vidéo, les informations de profondeur comprenant des informations concernant la distance entre un ou plusieurs objets dans l'image d'une trame vidéo ;
utiliser les informations de profondeur pour déterminer une position relative entre le ou les marqueurs d'étalonnage et le système de caméra ;
déterminer des données d'étalonnage, les données d'étalonnage comprenant des informations de position d'une ligne de chronométrage virtuelle orientée en travers de la piste à une position prédéterminée par rapport à la position du ou des marqueurs d'étalonnage ;
et des informations de position associées à une zone de chronométrage virtuelle sur la piste à une position prédéterminée par rapport à la position du ou des marqueurs d'étalonnage, la zone de chronométrage s'étendant à travers la piste et le long de la piste pour filtrer spatialement un objet détecté à l'extérieur de la zone de chronométrage virtuelle dans un procédé selon l'une quelconque des revendications 1 à 10; et
stocker les coordonnées du plan virtuel dans une mémoire du système de chronométrage.

12. Système permettant de déterminer le temps de passage d'un objet passant devant une ligne de chronométrage sur une piste de sport, comprenant :
au moins un système de caméra connecté à un ordinateur ;
l'ordinateur comprenant un support de stockage lisible par ordinateur dans lequel est incorporé un code de programme lisible par ordinateur, et un processeur, de préférence un microprocesseur, couplé au support de stockage lisible par ordinateur,
en réponse à l'exécution du code de programme lisible par ordinateur, le processeur étant configuré pour effectuer des opérations exécutables comprenant les étapes consistant à :
recevoir des trames vidéo capturées par un système de caméra étalonné, chaque trame vidéo représentant une image de scène comprenant un ou plusieurs objets se déplaçant sur une piste et des objets se déplaçant à l'extérieur de la piste, chaque trame vidéo étant associée à une instance de chronométrage, le système de caméra étalonné comprenant des données d'étalonnage définissant une zone de chronométrage virtuelle dans les trames vidéo positionnées à une distance prédéterminée du système de caméra étalonné, la zone de chronométrage virtuelle s'étendant sur la piste et le long des côtés de la piste ;
détecter des objets dans les trames vidéo à l'aide d'un algorithme de détection d'objets, les objets détectés par l'algorithme de détection définissant les objets détectés ;
déterminer des informations de profondeur pour au moins une partie des trames vidéo, les informations de profondeur comprenant des informations concernant la position des objets détectés par rapport au système de caméra étalonné ;
déterminer si les objets détectés sont positionnés à l'intérieur de la zone de chronométrage virtuelle ou à l'extérieur de la zone de chronométrage virtuelle sur la base des données d'étalonnage et des informations de profondeur, afin de filtrer les objets détectés à l'extérieur de la zone de chronométrage virtuelle ;
appliquer un algorithme d'analyse de caractéristiques à au moins une partie des objets détectés dans les trames vidéo qui sont déterminées comme étant à l'intérieur de la zone de chronométrage virtuelle, l'algorithme d'analyse de caractéristiques déterminant les caractéristiques d'identification pour l'objet ou les objets détectés à l'intérieur de la zone de chronométrage virtuelle ; et
déterminer un temps de passage pour des objets détectés qui ont été déterminés comme étant positionnés à l'intérieur de la zone de chronométrage virtuelle et qui passent une ligne de chronométrage virtuelle à travers la piste sur la base des données d'étalonnage, des informations de profondeur et d'une ou plusieurs instances de chronométrage d'une ou plusieurs trames vidéo des objets détectés qui passent la ligne de chronométrage virtuelle.

13. Système selon la revendication 12, dans lequel les opérations exécutables comprennent en outre l'une quelconque des étapes de procédé selon les revendications 2 à 10.

14. Module d'étalonnage pour système de chronométrage configuré pour déterminer le temps de passage d'un objet passant devant une ligne de chronométrage sur une piste de sport, le module comprenant :
des moyens de traitement pour recevoir des trames vidéo, de préférence une séquence de trames vidéo, capturées par un système de caméra d'un système de chronométrage, chaque trame vidéo représentant une image de scène comprenant la piste et un ou plusieurs marqueurs d'étalonnage, de préférence au moins deux marqueurs d'étalonnage étant positionnés sur des côtés opposés de la piste ;
déterminer des informations de profondeur, par exemple une ou plusieurs cartes de profondeur, sur la base des trames vidéo, les informations de profondeur comprenant des informations concernant la distance entre un ou plusieurs objets dans l'image d'une trame vidéo ;
utiliser les informations de profondeur pour déterminer une position relative entre le ou les marqueurs d'étalonnage et le système de caméra ;
déterminer des données d'étalonnage, les données d'étalonnage comprenant des informations de position d'une ligne de chronométrage virtuelle orientée en travers de la piste à une position prédéterminée par rapport à la position du ou des marqueurs d'étalonnage ;
et des informations de position associées à une zone de chronométrage virtuelle sur la piste à une position prédéterminée par rapport à la position du ou des marqueurs d'étalonnage, la zone de chronométrage s'étendant à travers la piste et le long de la piste pour filtrer spatialement un objet détecté à l'extérieur de la zone de chronométrage virtuelle dans un procédé selon l'une quelconque des revendications 1 à 10 ; et,
stocker les coordonnées du plan virtuel dans une mémoire du système de chronométrage.

15. Support de stockage non transitoire lisible par ordinateur stockant au moins une partie de code logiciel, la partie de code logiciel, lorsqu'elle est exécutée ou traitée par un ordinateur d'un système tel que défini dans la revendication 12, étant configurée pour exécuter les étapes du procédé selon l'une quelconque des revendications 1 à 10.
